(19) **Europäisches Patentamt / European Patent Office / Office européen des brevets**

(11) **EP 4 619 141 B1**

(12) **EUROPEAN PATENT SPECIFICATION**

(45) Date of publication and mention
of the grant of the patent:
**22.07.2026 Bulletin 2026/30**

(21) Application number: **24773538.4**

(22) Date of filing: **09.09.2024**

(51) International Patent Classification (IPC):
**C04B 41/00** (2006.01)       **C04B 41/50** (2006.01)
**C04B 41/85** (2006.01)       **C04B 38/00** (2006.01)
**B01D 53/94** (2006.01)       **B01J 35/57** (2024.01)
**F01N 3/022** (2006.01)       **F01N 3/035** (2006.01)
**B01J 23/42** (2006.01)       **B01J 37/00** (2006.01)
**B01J 37/02** (2006.01)       **B01J 37/08** (2006.01)
**C04B 111/00** (2006.01)

(52) Cooperative Patent Classification (CPC):
(C-Sets available)
**C04B 41/009; B01D 53/945; B01J 23/42;
B01J 35/57; B01J 37/0018; B01J 37/0219;
B01J 37/088; C04B 38/0009; C04B 41/5031;
C04B 41/85; F01N 3/0222; F01N 3/035;**
C04B 2111/00793; C04B 2111/00801      (Cont.)

(86) International application number:
**PCT/GB2024/052349**

(87) International publication number:
**WO 2025/163277 (07.08.2025 Gazette 2025/32)**

(54) **METHOD OF MAKING CERAMIC WALL-FLOW FILTER SUBSTRATE SUPPORTING POROUS ON-WALL COATING**

VERFAHREN ZUR HERSTELLUNG EINES KERAMISCHEN WANDFLUSSFILTERSUBSTRATS MIT PORÖSER WANDBESCHICHTUNG

PROCÉDÉ DE FABRICATION D'UN SUBSTRAT DE FILTRE À ÉCOULEMENT MURAL EN CÉRAMIQUE SUPPORTANT UN REVÊTEMENT POREUX SUR LA PAROI

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.01.2024 EP 24154820**

(43) Date of publication of application:
**24.09.2025 Bulletin 2025/39**

(73) Proprietor: **Johnson Matthey Public Limited
Company
London EC2V 7AD (GB)**

(72) Inventors:
• **BELLHAM, Peter
  Royston Hertfordshire SG8 5HE (GB)**
• **CHIFFEY, Andrew Francis
  Royston Hertfordshire SG8 5HE (GB)**
• **CORRIGAN, Christopher
  Royston Hertfordshire SG8 5HE (GB)**
• **VIDIC, Marko
  Royston Hertfordshire SG8 5HE (GB)**

(74) Representative: **Johnson Matthey Public Limited
Company
Blounts Court Road, Sonning Common
Intellectual Property Department
Reading RG4 9NH (GB)**

(56) References cited:
**EP-A1- 3 623 048       WO-A1-2021/126685
US-A1- 2015 151 288**

(52) Cooperative Patent Classification (CPC): (Cont.)

C-Sets
**C04B 38/0009, C04B 35/195, C04B 38/0054,
C04B 38/0074;
C04B 41/009, C04B 38/0006, C04B 35/195;
C04B 41/009, C04B 38/0006, C04B 35/565;
C04B 41/5031, C04B 41/4535, C04B 41/4582,
C04B 41/5122, C04B 41/0072, C04B 2103/42**

**Description**

## FIELD OF THE INVENTION

The present invention relates to a method of making a ceramic honeycomb wall-flow filter substrate supporting a porous on-wall coating for use in treating exhaust gas from diesel engines or internal combustion engines configured to run on a gaseous fuel comprising a majority fuel mass of hydrogen ($H_2$). The invention also relates to a ceramic honeycomb wall-flow filter substrate supporting a porous on-wall coating obtained by or obtainable by the method of the invention; and to on-wall coated ceramic honeycomb wall-flow filter substrate for treating exhaust gas comprising particulate matter emitted from an internal combustion engine; and an exhaust system for an internal combustion engine comprising a ceramic honeycomb wall-flow filter substrate.

## BACKGROUND TO THE INVENTION

As emission legislation for vehicles continues to tighten around the World including, among others, those having compression ignition engines in their power train, there is an increasing need to reduce emissions of particulate matter in both size and number throughout a vehicle's duty cycle, i.e. between key-on and key-off, including immediately from key-on/cold-start.

This can be seen from new emission regulations brought in in Europe, for example. In Europe from 1st September 2019, all new passenger cars introduced onto the European market for the first time have been tested according to a new regulation called the "REAL Driving Emissions" (RDE) test. The RDE test is a more realistic on-road emissions test in real driving conditions, for $NO_x$ and other particulate emissions, which are a major cause of air pollution. This test is carried out with a portable emission measuring system (PEMS) that is attached to the car while driving in real conditions on the road.

Additionally, a new laboratory-based test called the World Harmonised Light Vehicles Test Procedure (WLTP) has been implemented from 1st September 2017 to replace the outgoing "new European Driving Cycle" (NEDC) as the European vehicle homologation procedure. The WLTP is a global, harmonised standard for determining the levels of pollutants, $CO_2$ emissions and fuel consumption of traditional and hybrid cars and was developed by the United Nations Economic Commission for Europe (UNECE).

The 3rd package of the RDE test for Euro 6d-TEMP and Euro 6d vehicles (Regulation (EC) 2017/1154) introduced a particulate number (PN) measurement protocol and an associated conformity factor (relative to the WLTP limits) of 1.5 (including a margin of 0.5) from 1st September 2017 for new vehicle models (or "type approvals") and up to 1st September 2019 for existing models. Furthermore, Euro 6e (Regulation (EC) 2017/1151), effective September 2023, introduces revisions to the RDE test procedure, in which the previously defined "conformity factors" are redefined as "PEMS error margins", including a reduced PN margin of 0.34, equivalent to a conformity factor of 1.34, down from 1.5.

Additionally, the European Parliament, Council and Commission have been negotiating the long-expected Euro 7 proposal for new emission standards for on-road vehicles, including both light-duty (cars and vans) and heavy-duty vehicles (trucks and buses) sold in the EU. The proposal merges the successor regulations to Euro 6 (Regulation (EC) 715/2007) and Euro VI (Regulation (EC) 595/2009) into one single act, referred to as Euro 7 in both light and heavy-duty legislation (and no longer Euro VII for heavy-duty legislation). According to press releases of the European Parliament and European Council of 18th December 2023, as of the filing date, the EU7 proposals proceeding through the EU parliament have been provisionally agreed and include, for cars and vans (light-duty), the maintenance of current Euro 6e exhaust emission limits but a restriction on the emission of solid particles with a diameter starting from 10 nm (PM10), instead of the current 23 nm for Euro 6. For heavy-duty, in addition to the restriction on the emission of solid particles from PM10, the Euro 7 proposals include NOx limit values set at 200 mg/kWh (from 460 mg/kWh) over the World Harmonised Transient Cycle; and ammonia and $N_2O$ limits have been introduced.

The EU Commission proposed date for the entry into force of the Euro 7 regulation was 1st July 2025 for new light-duty vehicles, and 1st July 2027 for new heavy-duty vehicles. The provisional agreement under trialogues between the EU Parliament, Council and Commission replaces these dates, reverting to the two-date approach of new vehicle types initially, followed by all new vehicles registered. These dates are stated as a number of months after entry into force of the regulation. For light-duty vehicles this is provisionally agreed as +30 months for "new types" and +42 months for "all types". For heavy-duty vehicles this is provisionally agreed as +48 months for "new types" and +60 months for "all types".

As of the date of filing this application, the adoption of the Euro 7 regulation requires final formal approval and adoption by the European Parliament and the member states.

Methods of meeting current and future emission standards for particulate matter generally involve the use of filter substrates. Filter substrates including on-wall washcoats including pores derived in-part from the combustion of pore formers are known. For example, EP 0736503A1 discloses an exhaust gas-purifying filter produced by coating a mixture of ceramic powder e.g. zeolite or preferably alumina, and a communicating pore-forming material onto the surface of a matrix, e.g. cordierite or silicon carbide, with multiple pores, and then firing it to sinter the ceramic powder and form a coating layer, while burning off the communicating pore-forming material, to form communicating pores in the coating layer. The exhaust gas-purifying filter has a coating layer provided on the surface of a matrix with multiple pores, supporting a catalyst which purifies exhaust gas. The coating layer has communicating pores which communicate from its surface to the matrix. The coating layer is preferably formed not only on the surface of the matrix, but also on the inner surface of the pores inside the matrix.

According to claim 5 of EP 0736503A1, the size of the communicating pore-forming material is preferably the same as or smaller than the pores of the matrix. This is said to allow the communicating pore-forming material to smoothly penetrate onto the pores, to form the communicating pores in the coating layer which coats the inner surface of the pores. Alternatively, a communicating pore-forming material is a flammable substance with a size which is either equal to or larger than the thickness of the coating layer, which may be a material such as carbon, resin, wax, etc. The flammable substance may be in the form of, for example, whiskers, a needle shape (fibres, etc.), spheres or columns. However, if the size of the communicating pore-forming material is larger than that of the pores of the matrix, the communicating pore-forming material will not enter into the pores, possibly resulting in clogging of the ceramic powder inside the pores and a larger pressure loss by the filter. The average pore size of the communicating pores is preferably 10-60 $\mu$m.

Example 1 with reference to Figure 1 contains the only disclosure of an average pore size of the matrix in EP 0736503A1. Example 1 discloses a process for producing an exhaust gas purifying filter in which a cordierite honeycomb (all-flow) filter ($\Phi$140 mm x length 130 mm, 23.25 cells/cm$^2$ (150 cell/in$^2$) mesh, 0.45 mm wall thickness) was used as the matrix. A slurry of 95 wt% active alumina as the ceramic powder and 5 wt% alumina solution, and pH-adjusting dilute nitric acid was added to adjust the pH to 1-3. The average particle size of the active alumina used was 5-10 $\mu$m. To 100 wt% of the above-mentioned ceramic powder there was added 1.5 weight percent of a gas-generating substance as a communicating pore-forming material and 25 weight percent of carbon powder, and distilled water was further added to obtain a slurry. The particle size of the carbon powder is 10-80 $\mu$m, which is larger than the thickness of the coating layer to be formed (5-50 $\mu$m). The above-mentioned gas-generating substance was a gas inclusion material prepared by inclusion of butane gas in a thermoplastic resin followed by granulation. The matrix was immersed in the slurry while stirring, and was then removed. The excess slurry was then removed by air blowing, and drying was performed at 120°C for 2 hours, followed by heating at 700°C for 2 hours to sinter the ceramic powder. The carbon powder burned off during the heating and the thermoplastic resin gas-generating substance burned off, and the butane gas included therein escaped out from the coating layer. This resulted in formation of communicating pores communicating from inside to the surface of the coating layer.

In the finished product of Example 1, the communicating pores are distributed within a pore size range D of 20-40 $\mu$m, with an average of 30 $\mu$m measured by the mercury intrusion porosimetry. The average size of the pores of the matrix 5 is 20-40 $\mu$m. The honeycomb filter matrix was coated with the coating layer 40 g per litre of apparent volume, based on the weight difference of the matrix before and after coating. The thickness of the coating layer 1 is 5-50 $\mu$m. A catalyst such as Pt (platinum), Rh (rhodium) or the like is supported on the alumina.

Applicant's WO 2015/082892 discloses a catalysed honeycomb wall-flow filter for treating exhaust gas comprising particulate matter emitted from an internal combustion engine, which filter comprising a honeycomb substrate having a first end and a second end and comprising an array of interconnecting porous walls defining an array of longitudinally extending first channels and second channels, wherein the first channels are bordered on their sides by the second channels and have a larger hydraulic diameter than the second channels, wherein the first channels are end-plugged at a first end of the honeycomb substrate and the second channels are end-plugged at a second end of the honeycomb substrate, wherein channel wall surfaces of the first channels comprise an on-wall-type catalytic washcoat. The disclosure also relates to an exhaust system comprising the catalysed filter and to methods of making the catalysed filter.

The disclosure explains that the surface porosity of the washcoat can be increased by including voids therein. By "voids" in the washcoat layer is meant that a space exists in the layer defined by solid washcoat material. Voids can include any vacancy, fine pore, tunnel-state (cylinder, prismatic column), slit etc., and can be introduced by including in a washcoat composition for coating on the filter substrate a material that is combusted during calcination of a coated filter substrate, e.g. chopped cotton, plastic beads or materials to give rise to pores made by formation of gas on decomposition or combustion, e.g. acetic acid, starch or other organics. The disclosure further explains that where the method of the invention involves applying washcoat to a partially plugged honeycomb substrate, solid pore formers such as polymer beads and chopped cotton can get filtered out in the filter along the axial length of the wall, so that the pore formers collect at one end of the axial washcoating, in which case, liquid pore formers such as citric acid are preferred. The average void ratio of the washcoat can be from 5-80%, whereas the average diameter of the voids can be from 0.2 to 500$\mu$m, such as 10 to 250$\mu$m.

The arrangement of channels (or cells) in the end face on the inlet side of a filter having hydraulic diameters larger than those of channels (or cells) in the end face on the outlet side of the filter are known as asymmetric channel designs.

EP 2158956A1 discloses a second honeycomb filter provided with: partition walls having a porous partition wall base material which separates and forms a plurality of cells functioning as the flow paths of fluid and a surface layer provided on only the inflow side or both the inflow side and an outflow side of the partition wall base material, wherein

**EP 4 619 141 B1**

predetermined cells each having one end opened on one side and the other end plugged on the other end and remaining cells each having one end plugged on one end and the other end opened on the other side are alternately arranged, the surface layer provided on at least the inflow side of the partition wall base material is constituted of a catalyst layer containing at least one material selected from the material group consisting of alumina, zirconia, titania, zeolite and ceria, and the following conditions (I) to (V) are satisfied: (I) the peak pore diameter of the surface layer is equal to or smaller than the average pore diameter of the partition wall base material, and the porosity of the surface layer is larger than that of the partition wall base material; (II) the surface layer has a peak pore diameter of 0.3 μm or more and less than 20 μm and a porosity of 60% or more and less than 95% (the measurement method is mercury porosimetry); (III) the thickness L1 of the surface layer is 0.5% or more and less than 30% of the thickness L2 of the partition walls; (IV) the mass of the surface layer per filtration area is 0.01 mg/cm$^2$ or more and less than 6 mg/cm$^2$ (corresponding to 0.06 to 38.71 mg/in$^2$); and (V) the partition wall base material has an average pore diameter of 1 0 μm or more and less than 60 μm and a porosity of 40% or more and less than 65%. In the second honeycomb filter disclosed, the surface layer constituted of the catalyst layer preferably carries the fine particles of one or both of platinum and palladium. The second honeycomb filter can be an asymmetric design, e.g. see claim 14.

EP 2158956A1 also discloses a method of manufacturing the second honeycomb filter, comprising the steps of: beforehand manufacturing, as a fired article, a honeycomb structure provided with a porous partition wall base material which separates and forms a plurality of cells functioning the flow paths of fluid; mixing at least one material selected from the material group consisting of alumina, zirconia, titania, zeolite and ceria, a pore former burnable and flyable at a temperature of 800°C or less, having an average particle diameter of less than 10 μm and having a ratio of 20 mass% or more and less than 90 mass% in a material solid content and water to obtain slurry; and depositing the slurry on only an inflow side or both the inflow side and an outflow side of a formed honeycomb article, and then performing drying or drying and firing to provide a surface layer on only the inflow side or both the inflow side and the outflow side of the formed honeycomb article.

EP 2158956A1 discloses a single embodiment (Example 44) including a catalyst layer carrying a platinum group metal, wherein a mixture of gamma alumina and ceria (CeO$_2$) in an unspecified weight ratio having an average particle diameter of 5 μm was immersed in a platinum (Pt)-containing solution. Resin particles having an average particle diameter of 3 μm were added as a pore former and further acetic acid and water were added to obtain a slurry. The quantity of pore former included in the slurry in a ratio in material solid content (mass%) was 71%. This slurry was coated as a surface layer by vacuum-sucking from the outlet-side end face of a plugged honeycomb structure (average pore diameter 25 μm, 144mm (5.7 inches) diameter, 152 mm (6.0 inches), length, 46.5 cells/cm$^2$ (300 cells per square inch), 300 μm (11.8 mil (thousandths of an inch)) partition wall thickness) to deposit the slurry on the inflow side of the partition wall base material. Subsequently, after drying the structure, the structure was fired at 600°C for three hours to obtain a honeycomb filter in which the plugged honeycomb structure was provided with the surface layer constituted of a catalyst layer (an average thickness of 30 μm). The amount of an oxide (gamma-Al$_2$O$_3$ and CeO$_2$) in the surface layer was 0.75 mg per 1 cm$^2$ of partition wall filtration area; and the amount of Pt was 2 g per kilolitre of the volume of the honeycomb structure, which Applicant calculates corresponds to a washcoat loading of 0.13 g/in$^3$ (7.9 g/L); and 0.0567 g/ft$^3$ (0.002 g/L). The catalyst layer had a peak pore diameter of 3 μm and a porosity of 82%. Applicant understands that "ratio in material solid content (mass%)" of the "pore former included in slurry for surface layer" according to Table 2 means that the 82% porosity in the catalyst layer was obtained by formulating the slurry for the surface layer so that 71 mass% of the material solid content was pore former.

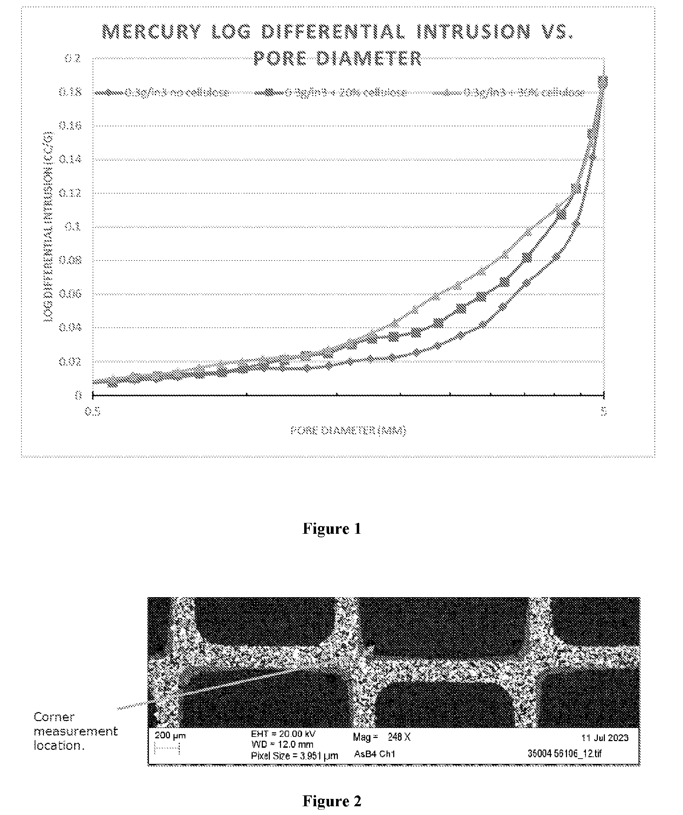

EP 1961481A2 discloses a catalytic converter comprising a three-dimensional structural support, optionally a wall flow filter of Figure 1, having a plurality of cells partitioned by porous cell walls, in which a pore diameter of the cell walls is 10 μm to 50 μm and porosity of the cell walls is 40 vol% or more; and a catalyst-coated layer containing a catalyst component. The catalyst-coated layer is coated on surfaces of the cell walls of the three-dimensional structural support. 50 mass% or more of a total supported amount of the catalyst component on the three-dimensional structural support is present in a region from the surfaces of the cell walls of the three-dimensional structural support to surfaces of the catalyst-coated layer, i.e. up to 50 mass% of a total supported amount of the catalyst component on the three-dimensional structural support is present within the porous cell walls. In Examples 4 and 12, the catalyst coated layer at 50 grams per litre (equivalent to 0.82 g/in$^3$) loading derived from a slurry comprising platinum-supported aluminium oxide powder and activated carbon or polystyrene beads as a pore former is coated onto a silicon carbide honeycomb support of diameter 144 mm, length 152 mm, a cell density was 400/in$^2$ (62 cells per cm$^2$), a mean pore diameter in the cell wall of 10 to 20 μm, and a porosity of 50 to 60 vol%. No details are given regarding the particle size of the aluminium oxide powder, activated carbon or polystyrene beads.

WO 2008/153828A2 discloses methods for preparing porous inorganic coatings on porous supports using certain organic pore formers, and porous supports coated with porous inorganic coatings. Inorganic particle constituents such as alpha- and gamma-alumina are disclosed. The coating compositions can comprise from 0.1 to 50 wt% of inorganic particles. Although diesel particulate filter products are mentioned as an application for the disclosure, no details of suitable such filters or their physical parameters are disclosed and none is exemplified. Furthermore, none of the exemplified inorganic coatings include platinum group metals. Example 3 describes deposition of an alpha-alumina membrane (a blend of alpha-alumina particles of mean particle sizes 0.8-1.1 $\mu$m and 0.3-0.4 $\mu$m) using protein from skimmed milk having a mean particle size of 0.4 $\mu$m as a pore former.

EP 2502662A1 discloses a honeycomb filter comprising a honeycomb base material including a porous partition wall parent material to partition and form a plurality of cells which become through channels of a fluid; plugged portions arranged in open frontal areas of predetermined cells in an end surface on an inflow side of the fluid and open frontal areas of the remaining cells in an end surface on an outflow side of the fluid; and a porous collecting layer disposed on the surface of the partition wall parent material in at least the remaining cells. The collecting layer has a constitution in which a plurality of particles combine or intertwine with one another, and the collecting layer includes flat plate-like particles as the plurality of particles having a defined aspect ratio. The plurality of particles are particles in which an average long diameter is 0.2 $\mu$m or larger and smaller than 10 $\mu$m, an average value of ratios (long diameters/short diameters) of the long diameters to the short diameters of the respective particles is smaller than 3, and an average value of ratios (the long diameters/thicknesses) of the long diameters to thicknesses of the respective particles is 3 or larger.

Example 14 of EP 2502662A1 is the only example in which the collecting layer includes a platinum group metal (platinum only, 0.5 mass%). In this Example, the coating composition includes composite plate-like particles obtained by coating alumina particles having an average long diameter of 5 $\mu$m, an average value of long diameters/short diameters which was 2 and an average value of the long diameters/thicknesses which was 20 with a slurry obtained by mixing 60 g of ceria sol containing 15 mass% of $CeO_2$, 20 g of alumina sol containing 20 mass% of $Al_2O_3$ and 4 g of aqueous platinum chloride solution containing 10 mass% of Pt were used as a raw material to form a collecting layer. It is understood that no pore former was used because, during application of the slurry to the partition wall parent material, the "plurality of particles combine or intertwine with one another in a state where the particles are not excessively aligned along the surface of the partition wall parent material. In consequence, the above high open area ratio is realized", thereby suppressing "the increase of an initial pressure loss of the honeycomb filter". That is, the relatively high aspect ratios of the composite plate-like particles is essential to realise the claimed suppression of increase of an initial pressure loss.

WO 2017/209083A1 discloses an exhaust gas purification filter that is alleged to suppress an increase in pressure loss associated with the formation of a catalyst layer and at the same time promotes particulate matter combustion. The exhaust gas purification filter according to the present invention includes a honeycomb base and a catalyst layer provided on the honeycomb base. The catalyst layer contains a carrier and a metal catalyst. Large pores having a circle equivalent diameter greater than 5 $\mu$m occupy, when an area of the catalyst layer is 100% in an electron microscope observation image of a cross section of the catalyst layer, 45% or more of the area. The Examples disclose a number of platinum and palladium-containing catalyst layers in which a solution of platinum group metal salt(s) (platinum and palladium) are impregnated into "needle $Al_2O_3$ powder" having an average fibre diameter of 0.5 $\mu$m and an average fibre length of 6 $\mu$m or "needle $TiO_2$ powder" having an average fibre diameter of 0.2 $\mu$m and an average fibre length of 2 $\mu$m. However, Examples of milled $Al_2O_3$ or $TiO_2$ or CeZr particulate powder each having an average particle size of 2 $\mu$m by wet milling are also disclosed. In the Examples, the large pores are introduced by the pore formers which are melamine resin beads, starch or polymethyl methacrylate resin of various sizes (average particle size of 2 $\mu$m, 5$\mu$m and 10$\mu$m). Citric acid (foaming agent) was used as a comparison "pore shaping agent". Following calcination, during which the pore formers were removed by combustion, the catalyst layers had a loading of 15 g/L (equivalent to 0.246 g/in$^3$). Example 19 is a honeycomb base coated with three-way catalyst compositions including rhodium and ceria-zirconia multiple oxide are also disclosed. It is understood, therefore, that Examples 1 to 18 are directed at products for treating Diesel particulate matter.

However, none of Examples 1 to 18 provide any specific details of the silicon carbide honeycomb base used, other than the partition wall thickness (12 thousandths of an inch (mil) equivalent to 0.3048 mm) and cell density (300 cells per square inch, or 46.5 cells/cm$^2$). That is, there is no correlation of particle size of the catalyst layer, pore former-derived pore size of the particle layer and pore size of the honeycomb base.

EP 3623048A1 discloses an exhaust gas purification catalyst device including a honeycomb base material and an inlet-side coat layer, wherein: the honeycomb base material includes a plurality of cells partitioned by porous partition walls, the plurality of cells including inlet-side cells and outlet-side cells and being configured such that exhaust gas that has flowed into the inlet-side cells passes through the partition walls and is exhausted from the outlet-side cells; and the inlet-side coat layer is present on the surface sides of the partition walls of the inlet-side cells, with the proportion of 4-9 $\mu$m through-pores in the through-pore diameter distribution of the partition walls of the coated honeycomb base material measured according to the bubble point method using a perm porometer being at least 80 vol%, and the peak pore diameter measured using a mercury porosimeter being at least 3.0 $\mu$m greater than the peak through-pore diameter also measured according to the bubble point method using a perm-porometer.

The exhaust gas purification catalyst device can be prepared using a method, wherein a slurry coat layer containing inorganic oxide particles and a pore forming material is coated within the inlet side cells of the honeycomb substrate and the slurry-coated honeycomb substrate is baked. The pore forming material can be an organic polymer particle, such as (meth)acrylic resin particles, styrene-(meth)acrylic resin particles, polyurethane resin particles, maleic acid resin particles, styrene-maleic acid resin particles, alkyd resin particles, rosin-modified phenolic resin particles and ketone resin particles, having an average particle diameter of 10 nm or more to 500 nm or less (0.01 to 0.5 $\mu$m). The general description explains that the median diameter of the inorganic oxide particles is, for example, 0.1 $\mu$m or more, 0.3 $\mu$m or more, 0.5 $\mu$m or more, 0.8 $\mu$m or more or 1.0 $\mu$m or more, and for example, 10 $\mu$m or less, 5.0 $\mu$m or less, 3.0 $\mu$m or less, 2.0 $\mu$m or less, 1.5 $\mu$m or less or 1.0 $\mu$m or less.

In an Example of EP 3623048A1, a cylindrical SiC diesel microparticle collection filter substrate of honeycomb structure having a diameter of 160 mm and length of 135 mm (i.e., 2.71 litres volume), 12 $\mu$m average pore diameter (nominal value) and 42% porosity by volume was coated with a slurry containing 100g Pd/Pt-alumina powder (36.9 g/L or 0.604 g/in$^3$), 50g a ceria-zirconia complex oxide powder, which powders had been milled to obtain a mixture having an average particle diameter of 1 $\mu$m before the addition of styrene-acrylic resin particles having an average particle diameter of 100 nm (0.1 $\mu$m) in an amount of 30% by weight based on the solid content in the slurry.

WO 2021/126685A1 discloses a catalyst washcoat composition comprising a slurry comprising at least one platinum group metal and/or at least one non-platinum group metal supported on at least one support; and at least one pore forming agent having a particle size ranging from 100 nm to 5.0 $\mu$m, wherein the pore forming agent is selected from carbon nano-tubes, carbon nano-fibres, activated carbon, resins, cellulose powder, and polymer spheres. A catalyst article for capturing particulate matter of size ranging from 1.0 nm to 100 $\mu$m, said article comprising the catalyst washcoat deposited on a substrate and calcined to form pores of which 50%-100% have a pore size ranging from 100 nm to 5.0 $\mu$m is also disclosed. The only example is of a catalyst composite/article coated with a washcoat comprising both rhodium and an oxygen storage component containing ceria ($CeO_2$). That is, the article of the Example is for use as a gasoline soot filter.

EP 3263214 A1 discloses a method for producing a catalyst for purification of exhaust gas, comprising: a step of obtaining a catalyst slurry by mixing metal oxide particles having a cumulative 50% diameter value in a range of 3 to 10 $\mu$m in a volume-based cumulative particle size distribution measured by laser diffractometry, a noble metal raw material, and a fibrous organic material having an average fibre diameter in a range of 1.7 to 8.0 $\mu$m and having an average aspect ratio in a range of 9 to 40 such that an amount of the fibrous organic material is in a range of 0.5 to 9.0 parts by mass relative to 100 parts by mass of the metal oxide particles; a step of forming a catalyst slurry layer by applying the catalyst slurry onto a surface of a substrate such that a catalyst coat layer after calcination has an average thickness in a range of 25 to 160 $\mu$m; and a calcination step of removing at least part of the fibrous organic material in the catalyst slurry layer to obtain a catalyst for purification of exhaust gas. According to the disclosure, the "aspect ratios of pores" in a resulting catalyst coat layer can be determined by analysing three-dimensional information about pores from cross-sectional images of cross-sections of the catalyst coat layer which are perpendicular to the flow direction of exhaust gas in the substrate by FIB-SEM (Focused Ion Beam-Scanning Electron Microscope).

Additionally, EP 3263214A1 explains that if the average aspect ratio is less than 9, the connectivity of the pores is so insufficient that the gas diffusibility is insufficient; and if the amount of the fibrous organic material mixed exceeds 9.0 parts by mass relative to 100 parts by mass of the metal oxide particles, the increase in thickness of the catalyst coat layer increases the pressure drop, causing deterioration in fuel-efficiency. Moreover, in the catalyst end-product, a coating amount of the catalyst coat layer in the catalyst for purification of exhaust gas is preferably in a range of 50 to 300 g/L, equivalent to 0.819 to 4.916 g/in$^3$. If the coating amount is less than 50 g/L, the catalyst particles do not provide sufficient catalytic activity performance, so that the obtained catalytic performance such as NOx purification performance tends to be insufficient. According to the Examples, the NOx purification performance ("Test for Measuring NOx Removal Ratio") was conducted under gasoline exhaust gas conditions, i.e. "an air/fuel feedback control aimed at 14.1 to 15.1 was carried out by using an in line 4-cylinder 2.4 L engine, and the NOx removal ratio was calculated from the average amount of NOx emitted at the A/F switching. Here, the engine operation conditions and the set-up of the piping were adjusted such that the amount of air taken in was 40 (g/sec), and the temperature of the gas flowing into the catalyst was 750°C".

It is known e.g., from WO 2006/031600, that coating the inlet channels of a wall-flow filter substrate with a catalytic washcoat from one substrate end to an axial length less than a full axial length of the substrate; and coating the outlet channels with the catalytic washcoat from the other substrate end for a remainder of the axial length of the substrate can beneficially reduce the backpressure across the filter substrate relative to a filter substrate coated homogeneously from the inlet channels to the full axial length of the filter substrate. However, the skilled person will know that any gap in the axial length coating can lead to filtration failure because exhaust gas, which is a fluid, like water, will pass through the walls of a wall-flow filter where there is the least resistance to gas flow. This means that the exhaust gas will preferentially pass through any axial gap in coating. For this reason, practical manufacture of catalytically coated filters generally targets a small overlap of inlet and outlet channel coatings.

It is common general knowledge that a population of inorganic oxide particles for use in a washcoat in the field of art of the present invention inherently will have a particle size distribution including a D(v, 0.5) (also referred to as "D50") and a D(v, 0.9) (also referred to as "D90"). See for example "Catalytic Air Pollution Control - Commercial Technology", 3rd Edition, Ronald M. Heck et al., John Wiley & Sons, Inc. 2009 at chapter sub-heading 3.2.4 "Particle Size Distribution of the Carrier". This particle size distribution can be adjusted to some extent by mechanical milling, e.g. using a ball mill or by jet-milling. See M. Blažek et al., Chemical Engineering Journal, 409 (2021) 128057, from which it can also be seen that D50 and D90 of a population of inorganic oxide particles for use in a washcoat can be adjusted by combining e.g. two populations of different particle size distributions (see e.g. US patent no. 5496788, Example 1 and Figure 2). Differences in D(v, 0.5) and D(v, 0.9) can, in part, influence the location, e.g. on-wall or in-wall, of a washcoat when coated onto a wall-flow filter substrate.

In WO 2015/082892 discussed above, Applicant disclosed that the differences in hydraulic diameters of inlet and outlet face channels in asymmetric channel designs could be used to produce on-wall coatings on inlet channels having a larger hydraulic diameter than the outlet face channels. However, in more recent asymmetric designs of filter manufacturer Ibiden disclosed in, e.g., Society of Automotive Engineers (SAE) Technical Paper 2014-01-1512 and EP 2862610A1, by appropriate end-plugging of an unplugged substrate comprising channels of relatively larger and smaller hydraulic diameters, channels extending from the inlet end face and end-plugged at the outlet end face have both larger and smaller hydraulic diameters and surround a single, larger hydraulic diameter channel extending from the outlet end face and end-plugged at the inlet end face in a repeating pattern. This design is referred to by Ibiden as the "Valuable Plugging Layout" or VPL™.

There is a need in the art for filter devices for modern Diesel vehicles to meet proposed exhaust emission limits, such as EU7 including limits for PM10 emissions, which filter devices balance good cold flow backpressure and soot loaded back pressure characteristics with good filtration efficiency and can be manufactured cost-effectively and with as little environmental impact as possible. Looking to beyond vehicular Diesel internal combustion engines, there is also a need in the art for filter devices for treating particulate matter in exhaust gas from vehicular internal combustion engines powered by carbon neutral fuels, such as hydrogen or hydrogen-rich fuel stocks. The present invention is directed to meet these needs.

## SUMMARY OF THE INVENTION

According to a first aspect, the present invention provides a method of making a ceramic honeycomb wall-flow filter substrate having an axial length L supporting an on-wall coating, a fragment of which on-wall coated filter substrate analysed by mercury porosimetry has a volume of pores of 0.05 to 0.5 $\mu$m diameter as a percentage of a mercury intrusion volume of the fragment of at least 15.0%, which wall-flow filter substrate having a first end and a second end and comprising an array of axially extending first channels and second channels, each first and second channel being defined in part by a porous channel wall having axially-extending porous channel wall surfaces, each first channel sharing a porous channel wall with an adjacent second channel, wherein, in a scanning electron microscope image of a cross-section of the coated substrate, each channel has a geometric hollow section shape having at least one vertex defined in part by a vertex angle between two channel surface edges, wherein the first channels are end-plugged at the second end of the substrate and the second channels are end-plugged at the first end of the substrate, which method comprising the steps of:

(i) preparing a slurry comprising water, a carboxylic acid, inorganic oxide particles, or a mixture of two or more inorganic oxide particles, having a D(v, 0.9) determined by Laser Diffraction Particle Size Analysis of 8 to 20 $\mu$m; and 10 to 35 % by weight relative to 100% weight of the inorganic oxide particles of a particulate insoluble cellulose pore former of three dimensionally non-uniform shape and having an equivalent spherical diameter D(v, 0.5) of 0.5 to 14 $\mu$m as determined by laser diffraction and having a modal aspect ratio (width/length) as determined by direct particle measurement using a Flow Imaging Microscopy particle shape analyser of 0.3 to 0.9, wherein the particulate cellulose pore former is insoluble in the water, carboxylic acid and additional washcoat components of the slurry;

(ii) coating the slurry on at least the porous channel walls of the first channels of the substrate, wherein the substrate has a mean pore size (D50) of 6 to 15 $\mu$m prior to any coating and a porosity less than 60% prior to any coating; and

(iii) drying and calcining the slurry-coated substrate,

whereby sufficient slurry is coated on the substrate so that the product of step (iii) has a coating loading of 0.07 to 0.4 g/in$^3$ (4.3 to 24.4 g/L), relative to a substrate weight prior to step (ii), wherein a mean average on-wall coating thickness of the product of step (iii) measured at an angle that bisects the vertex angle on the scanning electron microscope cross-section image of the coated substrate is 5 to 70 $\mu$m. Applicant has found that the addition of an insoluble cellulose pore former in the quantities indicated pre-dispose the applied washcoat to an on-wall, as opposed to an in-wall, location. This can be seen, e.g. from the analysis shown in Example 9. It will be understood that, in the product of the first and second aspects of the invention, the term "on-wall" does not preclude that coating enters or is present in the porous channel walls of the substrate. Nevertheless, the product of the first and second aspects of the invention is defined by an on-wall coating thickness and the washcoat applied to the substrate in step (ii) of the first aspect of the invention finishes predominantly "on-wall".

The use of natural cellulose pore formers in the first aspect of the invention can beneficially reduce environmental impact relative to the use in the prior art of, e.g. thermoplastic resins, plastic beads etc. in that the combustion of plastics risks the release of dioxins, furans, mercury and polychlorinated biphenyls (BCP) or imposes a requirement to scrub such toxins from effluent created by prior art manufacturing processes.

Applicant prefers that in the method of the first aspect of the invention, the wall-flow filter substrate used in step (ii) is "naked", i.e. uncoated with another washcoat or unimpregnated with an aqueous solution of a metal salt prior to the commencement of step (ii).

The porous channel walls of the second channels can be uncoated or coated with the same or a different slurry composition according to step (i), i.e. in the first aspect, step (ii) can include the step of coating the porous channel walls of the second channels of the filter substrate with a slurry according to step (i), wherein the slurry for coating the second channels has the same or a different composition from the slurry coated on porous channel walls of the first channels. For the avoidance of doubt, where present, the coating on the channel walls of the second channels is also an on-wall coating.

A second aspect of the invention provides an on-wall coated ceramic honeycomb wall-flow filter substrate for treating exhaust gas comprising particulate matter emitted from an internal combustion engine, which wall-flow filter substrate having a first end and a second end and a length L therebetween and comprising an array of axially extending first channels and second channels, each first and second channel being defined in part by a porous channel wall having axially-extending porous channel wall surfaces, each first channel sharing a porous channel wall with an adjacent second channel, wherein, in a scanning electron microscope image of a cross-section of the coated substrate, each channel has a geometric hollow section shape having at least one vertex defined in part by a vertex angle between two channel surface edges, wherein the first channels are end-plugged at the second end of the substrate and the second channels are end-plugged at the first end of the substrate, wherein at least the channel wall surfaces of the first channels support 0.07 to 0.4 g/in$^3$ (4.3 to 24.4 g/L) of an on-wall-type washcoat relative to a substrate weight prior to coating, which washcoat comprising inorganic oxide particles, or a mixture of two or more inorganic oxide particles, wherein a mean average on-wall coating thickness measured at an angle that bisects the vertex angle on the scanning electron microscope cross-section image of the coated substrate is 5 to 70 $\mu$m, wherein a fragment of the on-wall coated filter substrate analysed by a mercury porosimetry has a volume of pores of 0.05 to 0.5 $\mu$m diameter as a percentage of mercury intrusion volume of the fragment of at least 15.0% and wherein the on-wall washcoat coating comprises voids of three dimensionally non-geometrically uniform shape of an equivalent spherical diameter D(v, 0.5) of 0.1 to 8 $\mu$m and a modal aspect ratio (width/length) of 0.3 to 0.9 as determined by Focused Ion Beam-Scanning Electron Microscopy (FIB-SEM).

In a third aspect, the invention provides an exhaust system for an internal combustion engine comprising a ceramic honeycomb wall-flow filter substrate according to the second aspect of the invention, wherein the first end of the substrate is oriented to the upstream side.

According to a fourth aspect, the invention provides an internal combustion engine comprising an exhaust system according to the third aspect.

The internal combustion engine of the fourth aspect is preferably a vehicular internal combustion engine configured to run either on Diesel fuel on a mixture of air and fuel, wherein the fuel of the mixture of air and fuel is a gaseous fuel comprising a majority fuel mass of hydrogen ($H_2$), which vehicle comprising a source of gaseous fuel comprising a majority fuel mass of hydrogen ($H_2$).

## DETAILED DESCRIPTION OF THE INVENTION

### Method - First Aspect of the Invention

Although washcoat adhesion can also be improved by increasing inorganic oxide particle "fines" in the particle size distribution of the inorganic oxide by milling, e.g. washcoat solids content in a milling liquor, milling time and milling speed etc., during development, Applicant's inventors found that when the inorganic oxide particles or a component inorganic oxide of the mixture of inorganic oxide particles has a pre-milled loose bulk density of 275 to 850 g/L, preferably 350 to 750 g/L, backpressure, filtration efficiency and washcoat adhesion are generally more reliably met.

The refractory metal oxide is typically selected from the group consisting of alumina, silica, titania, magnesia, ceria, zirconia and a mixed or composite oxide thereof, such as a mixed or composite oxides of two or more thereof. For example, the refractory metal oxide may be selected from the group consisting of silica-alumina, titania-alumina, zirconia-alumina, titania-silica, zirconia-silica, ceria-zirconia, zirconia-titania and alumina-magnesium oxide. During development, Applicant prepared one coated sample wherein the inorganic oxide was a rare-earth element doped $CeO_2$, but the backpressure, filtration efficiency and washcoat adhesion characteristics were unfavourable (see Example 7 hereinbelow). Another sample including the same $CeO_2$ inorganic oxide mixed with gamma alumina did not improve these properties sufficiently. With further development, Applicant believes that a ceria-containing inorganic oxide or mixture including a ceria-containing inorganic oxide for use in the relevant aspects of the invention may be identified. However, in view of the results shown in Example 7, Applicant prefers optionally to exclude inorganic oxide particles in the washcoat containing $CeO_2$ as such or in the mixture, i.e. the inorganic oxide particle as such or in the mixture does not contain $CeO_2$, either in whole or in part.

9

Preferably, the inorganic oxide of the inorganic oxide particles comprises or consists of alumina, silica, zirconia or a mixed oxide or composite oxide of any two or more thereof. This includes inorganic oxide particles comprising gamma alumina or an alumina doped with one or more of zirconium (Zr), titanium (Ti), silicon (Si), yttrium (Y), lanthanum (La), praseodymium (Pr), samarium (Sm), neodymium (Nd), preferably silicon, wherein the total weight percentage of dopant present in the doped alumina is preferably from 1 to 10 weight percent. Preferably the alumina is not alpha-alumina.

The inclusion of a dopant can thermally stabilise the refractory metal oxide or support material. It is to be understood that any reference to "doped" in this context refers to a material where the bulk or host lattice of the refractory metal oxide is substitution doped or interstitially doped with a dopant. In some instances, small amounts of the dopant may be present at a surface of the refractory metal oxide. However, most of the dopant will generally be present in the body of the refractory metal oxide. The chemical and/or physical properties of a refractory metal oxide are often affected by the presence of a dopant.

As is also illustrated in Example 7, gamma aluminas and doped aluminas that meet the pre-milled loose bulk density of 275 to 850 g/L show acceptable adhesion, whereas a doped alumina falling outside this pre-milled loose bulk density does not. However, the adhesion of $ZrO_2$, which does not meet the pre-milled loose bulk density of 275 to 850 g/L parameter, can be improved to meet acceptable adhesion limits by combining it with gamma aluminas and doped aluminas that do. Alpha-aluminas do not meet the requirements of the pre-milled loose bulk density of 275 to 850 g/L but in any event are less preferred, e.g. for use in catalytic washcoats, due to their low specific surface area because e.g. non-rhodium platinum group metals can sinter more easily on lower specific surface area particulate inorganic oxide supports and so their activity is less durable.

Although the invention has application to wall-flow filters substrates wherein substantially all juxtaposed channels have equal hydraulic diameters, in a preferred embodiment, the method according to the first aspect of the invention is applied to so-called asymmetric wall-flow filter substrates, wherein the axially extending first channels of the wall-flow filter substrate have a hydraulic diameter greater than the second channels.

In this first preferred embodiment, step (ii) can include the step of coating the porous channel walls of the second channels of the filter substrate with a slurry according to step (i) and the porous channel walls of the first channels are coated to an axial length of 60% to 90% L, preferably 70% to 85% L, and the porous channel walls of the second channels are coated to an axial length of from 10% to 40% L, preferably 15% to 35% L, wherein the sum of the axial lengths of the on-wall coating in the first channels and second channels is not less than 100%. Preferably an upper limit of overlap is 130% L.

Where porous channel walls of the second channels are coated with a slurry according to step (i), for the avoidance of doubt, the $g/in^3$ (g/L) coating loading of the definition of the first aspect of the invention is the total combined coating loading on the porous channel walls of both the first and second channels, i.e. relative to a substrate weight prior to the application of coating to either the first or second channels. The same applies to the definition of the second aspect of the invention.

In a second preferred embodiment, the axially extending first channels of the wall-flow filter substrate are a combination of channels having greater and lesser hydraulic diameters and the hydraulic diameter of the second channels is greater than the first channels having a lesser hydraulic diameter. That is, this embodiment is directed at applying the first aspect of the invention to Ibiden VPL™ filter substrates, described hereinabove in connection with SAE Technical Paper 2014-01-1512 and EP 2862610A1.

In this second preferred embodiment, step (ii) can include the step of coating the porous channel walls of the second channels of the filter substrate with a slurry according to step (i) and the porous channel walls of the first channels are coated to an axial length of 60% to 80% L and the porous channel walls of the second channels are coated to an axial length of from 60% to 80% L, wherein the sum of the axial lengths of the on-wall coating in the first channels and second channels is not less than 120%, preferably not less than 130%. Preferably an upper limit of overlap is 160% L.

The D(v, 0.5) of the pore former in step (i) is preferably less than the measured coating thickness to avoid adhesion problems and poor filtration efficiency.

Where the coated filter product of the first aspect of the invention is for use in treating particulate matter from an internal combustion engine powered by hydrogen fuel - so called "$H_2$-ICE" - the on-wall coating can comprise the inorganic oxide particles and no platinum group metal. However, for application to Diesel engines, and optionally also $H_2$-ICE, the on-wall coating is preferably an on-wall catalyst coating and the slurry of step (i) comprises one or more non-rhodium platinum group metal salts at a platinum group metal salt concentration selected so that the product of step (iii) has a total platinum group metal loading of 0.5 to 10 $g/ft^3$ (0.018 to 0.353g/L), preferably 1 to 8 $g/ft^3$ (0.035 to 0.283g/L). On analysis, Applicant has determined that the non-rhodium platinum group metal fixes to the inorganic oxide and has substantially no affinity for the cellulose pore former.

The non-rhodium platinum group metal can be platinum only or a combination of both platinum and palladium and the product of step (iii) can have a platinum to palladium weight ratio of 1:0>1:1. Wherein the non-rhodium platinum group metal is a combination of both platinum and palladium, the Pt:Pd weight ratio in the product of step (iii) is 10:1 to 1:1, preferably 6: 1 to 2:1.

Reference Example 4 hereinbelow shows how D(v, 0.9) can beneficially balance filtration efficiency and backpressure and potentially also adhesion (see Example 5). For at least these reasons, the inorganic oxide particles preferably have a D(v, 0.9) of 9 to 15 $\mu$m, more preferably 10 to 14 $\mu$m. Further improvements in washcoat adhesion can be obtained where - in combination with the above D(v, 0.9) parameter range - the inorganic oxide particles have a D(v, 0.5) of 3.0 to 6.0 $\mu$m. Applicant believes that this washcoat adhesion improvement may result from increased "fines" in the washcoat.

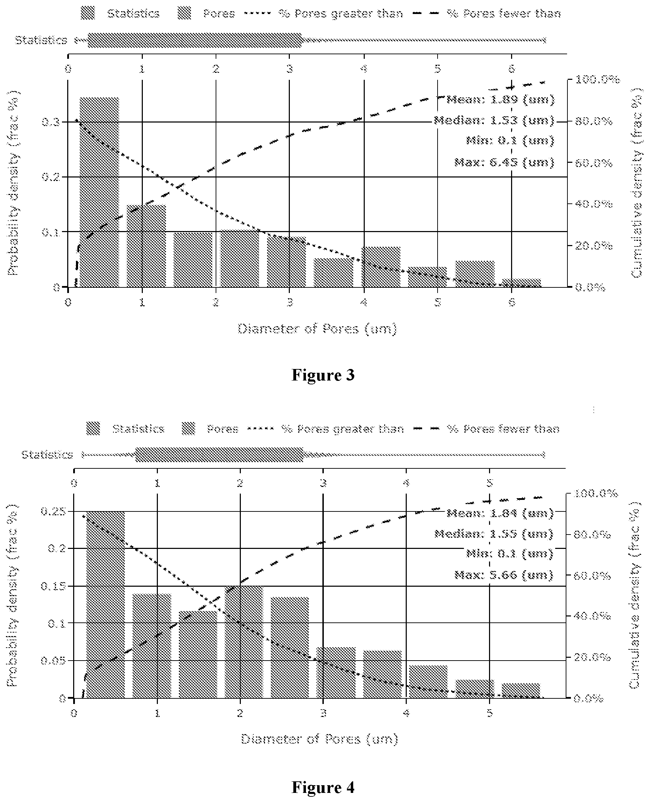

In Applicant's development work, its inventors identified two commercially available particulate insoluble cellulose raw materials for use as pore formers in the slurries of step (i) of the first aspect of the invention that result in products that meet the above-mentioned needs of the art. In a first such embodiment, the particulate insoluble cellulose is a microcrystalline cellulose having an equivalent spherical diameter D(v, 0.5) of 1 to 8.0 $\mu$m as determined by laser diffraction and having a modal aspect ratio (width/length) as determined by direct particle measurement using a Flow Imaging Microscopy particle shape analyser of 0.6 to 0.8. The resulting product includes the characteristics shown in Figure 4, as determined by FIB-SEM.

In a second embodiment, the particulate insoluble cellulose is fibrous cellulose having an equivalent spherical diameter D(v, 0.5) of 8.5 to 13.0 $\mu$m as determined by laser diffraction and having a modal aspect ratio (width/length) as determined by direct particle measurement using a Flow Imaging Microscopy particle shape analyser of 0.4 to 0.7. This results in a product having the characteristics shown in Figure 3, as determined by FIB-SEM.

The prior art discloses the use of washcoat slurries containing inorganic fibres, ceramic fibres or metal fibres for coating on filter substrates. Not only do such fibres create potential health and safety hazards for manufacture, e.g. asbestosis, but they can make coating control during manufacture more difficult, e.g. channel plugging, slurry clumping etc. The use of pore formers in the first aspect of the invention results in reliable coating compositions that generate repeatable and more uniform products.

The filter substrate for use in the first aspect of the invention is a ceramic filter substrate, e.g. of silicon carbide or cordierite construction. Where the filter substrate is a silicon carbide filter substrate, it is preferred that the porosity of the filter substrate is from 38 to 45% prior to coating. Applicant has found that this enables the resulting product to meet EU7 emission standards for PM10.

In mercury porosimetry analysis, Applicant has determined that silicon carbide filter substrates having a pre-coated porosity of from 38 to 45% can result in a coated product having a percentage porosity of less than 45.0% (see Example 6 hereinbelow).

Coated silicon carbide filter substrates the product of the first aspect of the invention and having a pre-coated porosity of from 38 to 45% can have a total pore volume of at least 0.230 cm$^3$/g determined by a combination of helium pycnometry and mercury densitometry (see Example 6 hereinbelow).

Alternatively, the filter substrate can be a cordierite filter substrate, in which case a filter porosity of 46 to 60% prior to coating is preferred, e.g. in order to meet EU7 emission standards for PM10.

In preferred products of the invention, sufficient slurry is coated on the substrate so that the product of step (iii) has coating loading of 0.15 to 0.3 g/in$^3$ (9.15 to 18.3g/L). Applicant has found that the selection of this parameter range can result in a product with a beneficial balance of backpressure, filtration efficiency, catalytic activity and adhesion.

The mean average on-wall coating thickness is preferably 10 to 60 $\mu$m to promote filtration efficiency and moderate backpressure.

The carboxylic acid can be a dicarboxylic acid or a tri-carboxylic acid, preferably citric acid or succinic acid. The carboxylic acid can promote numerous benefits, including slurry rheology, non-rhodium platinum group metal salt reduction to improve nano-particle dispersion and some micropore generation as gas is evolved during drying and calcination. Preferably, the carboxylic acid concentration in step (i) is selected so that the product of step (ii) has a carboxylic acid concentration of 50 to 400 g/ft$^3$ (1.77 to 14.1g/L). The lower end of this parameter range is preferred for non-platinum group metal-containing washcoats for H$_2$-ICE application.

The calcination temperature used is generally greater than 400°C $\pm$ 20°c.

The geometric shape of the first channel cross-section in the filter substrates for use in the present invention is square. Filter substrates having triangular cross-section channels are known, but in Applicant's experience, coating of triangular cross-section channels can result in channel plugging.

Product as such - Second Aspect of the Invention

In the second aspect of the invention, preferably, the porous channel walls of the second channels of the filter substrate are also coated with the on-wall-type washcoat, which has the same or a different composition from the washcoat coated on the porous channel walls of the first channels.

The refractory metal oxide is typically selected from the group consisting of alumina, silica, titania, magnesia, zirconia and a mixed or composite oxide thereof, such as a mixed or composite oxides of two or more thereof. For example, the refractory metal oxide may be selected from the group consisting of silica-alumina, titania-alumina, zirconia-alumina, titania-silica, zirconia-silica, zirconia-titania and alumina-magnesium oxide.

Preferably, the inorganic oxide of the inorganic oxide particles comprises of or consists of alumina, silica, zirconia or a mixed oxide or composite oxide of any two or more thereof but is preferably not alpha-alumina at least for the reasons explained hereinabove. Preferably, the inorganic oxide particles comprise gamma alumina or an alumina doped with one or more of zirconium (Zr), titanium (Ti), silicon (Si), yttrium (Y), lanthanum (La), praseodymium (Pr), samarium (Sm), neodymium (Nd), preferably silicon, wherein the total weight percentage of dopant present in the doped alumina is from 1 to 10 weight percent.

The axially extending first channels of the wall-flow filter substrate can have a hydraulic diameter greater than the second channels.

In a first embodiment according to the second aspect of the invention, the porous channel walls of the first channels are coated to an axial length of 60% to 90% L, preferably 70% to 85% L, and the porous channel walls of the second channels are coated to an axial length of from 10% to 40% L, preferably 15% to 35% L, wherein the sum of the axial lengths of the on-wall coating in the first channels and second channels is not less than 100%. Preferably an upper limit of overlap is 130% L.

In a second embodiment of the second aspect of the invention, the axially extending first channels of the wall-flow filter substrate are a combination of channels having greater and lesser hydraulic diameters and the hydraulic diameter of the second channels is greater than the first channels having a lesser hydraulic diameter.

Applicant has found that when coating the Valuable Plugging Layout filter substrate design using known techniques, e.g. Applicant's WO 99/47260, and targeting a slight axial overlap of inlet and outlet channel coatings, the differences in hydraulic diameters of the inlet channels causes catalyst washcoat to extend to a longer axial length in the inlet channels having greater hydraulic diameters than in the adjacent inlet channels having the lesser hydraulic diameters. Accordingly, in this second embodiment, the porous channel walls of the first channels are coated to an axial length of 60% to 80% L and the porous channel walls of the second channels are coated to an axial length of from 60% to 80% L, wherein the sum of the axial lengths of the on-wall coating in the first channels and second channels is not less than 120%, preferably not less than 130%. Preferably an upper limit of overlap is 160% L.

Where the on-wall coated ceramic honeycomb wall-flow filter substrate is particularly intended for application to treating exhaust gas from a Diesel engine, but possibly also a $H_2$-ICE, the on-wall coating is preferably an on-wall catalyst coating comprising one or more non-rhodium platinum group metals at a total platinum group metal loading of 0.5 to 10 g/ft$^3$ (0.018 to 0.353g/L), preferably 1 to 8 g/ft$^3$ (0.035 to 0.283g/L).

The non-rhodium platinum group metal can be platinum only or a combination of both platinum and palladium at a platinum to palladium weight ratio of 1:0>1:1.

Where the on-wall catalyst coating comprises both platinum and palladium, the Pt:Pd weight ratio can be 10:1 to 1:1, preferably 6:1 to 2:1.

Preferably, the on-wall-type washcoat does not contain inorganic fibres, ceramic fibres or metal fibres, for at least the reasons explained hereinabove.

In one embodiment, the filter substrate is a silicon carbide filter substrate having a porosity of 38 to 45% prior to coating and the coated filter substrate has a percentage porosity of less than 45.0%, as determined by mercury porosimetry (see Example 6 hereinbelow). The coated filter substrate of this embodiment can have a total pore volume of at least 0.230 cm$^3$/g determined by a combination of helium pycnometry and mercury densitometry (see also Example 6 hereinbelow).

In another embodiment, the filter substrate is a cordierite filter substrate having a porosity of 46 to 60% prior to coating.

Preferably, the on-wall-type washcoat coating is coated at a loading of 0.1 to 0.3 g/in$^3$ (6.1 to 18.3 g/L).

Preferably, the mean average on-wall coating thickness is 10 to 60 $\mu$m.

Preferably, the geometric shape of the first channel cross-section is square.

Exhaust system - Third Aspect of the Invention

In the exhaust system according to the third aspect of the invention, preferably a flow-through substrate supporting a diesel oxidation catalyst washcoat is disposed upstream from the ceramic honeycomb wall-flow filter substrate. The diesel oxidation catalyst oxidises NO in the exhaust gas to $NO_2$ for combusting particulate matter held on the downstream filter substrate. PM is beneficially combusted in $NO_2$ at lower exhaust gas temperatures than in $O_2$ (the so-called CRT$^®$ effect).

Additionally, or alternatively, the exhaust system of the third aspect of the invention comprises a flow-through substrate supporting a selective catalytic reduction catalyst or a wall-flow filter substrate supporting a selective catalytic reduction catalyst, which flow-through substrate or wall-flow filter substrate is disposed downstream from the ceramic honeycomb wall-flow filter substrate; and a source of nitrogenous reductant, preferably urea, and an injector for injecting the nitrogenous reductant into a flowing exhaust gas at a point in between the catalysed ceramic honeycomb wall-flow filter substrate and the flow-through substrate or wall-flow filter substrate supporting a selective catalytic reduction catalyst.

# EP 4 619 141 B1

## DEFINITIONS

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The acronym "PGM" as used herein refers to "platinum group metal". The term "platinum group metal" generally refers to the metals Ru, Rh, Pd, Os, Ir and Pt of the Periodic Table, particularly the metals Ru, Rh, Pd, Ir and Pt.

Any reference herein to an amount in units of $g/ft^3$ (grams per cubic foot) or $g/in^3$ (grams per cubic inch) etc. refer to the mean weight of a component per volume of the substrate. The volume of the substrate is the total volume of the substrate calculated by its external dimensions and ignoring any channels extending through the substrate, e.g. the volume of a cylindrical substrate that is 165 mm in diameter x 140.5 mm in length = h x $\pi$ x radius$^2$ = 3.0 litres. A conversion of $1g/ft^3$ to 0.035g/L may be used. A conversion of $1g/in^3$ to 61.0g/L may be used.

The expression "consisting essentially" used herein limits the scope of a feature to its novel and basic features within the context of the defined element, e.g. specified materials or steps, and any other materials or steps that do not materially affect the basic characteristics of that feature, such as for example minor impurities. The expression "consisting essentially of" embraces the expression "consisting of".

The total pore volume ($cm^3/g$) of a fragment of on-wall coated filter substrate was determined by helium pycnometry and mercury densitometry. Helium pycnometry determines the skeletal density ($g/cm^3$) (also sometimes referred to as the true density, the absolute density or the helium density); and mercury densitometry determines the geometric density ($g/cm^3$). Total pore volume in $cm^3/g$ is calculated as the reciprocal of the geometric density minus the reciprocal of the skeletal density, i.e. Total pore volume = (1/geometric density) - (1/skeletal density).

The percentage porosity of a fragment of on-wall coated filter substrate was also determined by helium pycnometry and mercury densitometry, wherein percentage porosity = (1 - (Skeletal Density ($g/cm^3$) / Geometric Density ($g/cm^3$)) x 100.

Direct particle measurement using Flow Imaging Microscopy was done using a Flowcam 8100 (Yokogawa Fluid Imagining Technologies, Inc., see https://www.fluidimaging.com/products/flowcam-nano-submicron-particle-imaging) controlled by Visual spreadsheet 5 software, equipped with a 20X objective lens, FOV50 flow cell, 0.5 mL syringe and grayscale camera. Samples were dispersed in deionised water at 0.1 wt% concentration, using a stirrer plate with magnetic follower at 400 rpm for 2 hours. The suspension was then filtered through a 35 $\mu$m Nylon mesh. 2 drops of sample were diluted in 1 mL of deionised water for analysis. The solution was analysed at a flow rate of 150 $\mu$L/min. Particle detection was performed using 20 dark pixel thresholds and four close hole iterations. Datasets were obtained from >10000 particles. Lists of individual particle characteristics were exported into Microsoft Excel spreadsheet software and analysed.

Particle size measurements were obtained by Laser Diffraction Particle Size Analysis using a Malvern Mastersizer 2000, which is a volume-based technique (i.e. D(v, 0.1), D(v, 0.5), D(v, 0.9) and D(v, 0.98) may also be referred to as DV10, DV50, DV90 and DV98 respectively (or D10, D50, D90 and D98 respectively) and applies a mathematical Mie theory model to determine a particle size distribution. Diluted washcoat samples were prepared by sonication in distilled water without surfactant for 30 seconds at 35 watts.

The term "modal", from "mode" average, has its ordinary meaning in statistics of "the value that appears most often in a set of data values". In a graphical representation of aspect ratios of particles in a population, the "mode" may appear as the tallest "peak".

A hydraulic diameter is a well-known term in the art when handling flow in non-circular tubes and channels. Using this term, one can calculate many things in the same way as for a round tube. When the cross-section is uniform along the tube or channel length, it is defined as $D_H$=4A/P, where A is the cross-sectional area of the flow, and P is the wetted perimeter of the cross-section. Measurements of the cross-section and wetted perimeter can be performed by simple measurements of the channels at exposed coated filter substrate end faces.

The term "insoluble" as used herein requires that the pore former does not dissolve within the slurry during the wash-coating process (i.e. in water and under the process conditions). That is, the pore former is insoluble in water and in the presence of the additional washcoat components, such as the carboxylic acid, in the process. This means that the pore former retains its non-uniform morphology throughout the process. Preferably the pore former is entirely insoluble in the washcoat at the coating temperature, regardless how long it remains in the washcoat, and preferably it remains insoluble even at temperatures of 100°C. Insolubility of a component can be assessed by any known technique, such as assessing the dry weight of the component before and after contact with the washcoat, to determine that there is no mass loss. It can also be assessed that the particles do not lose their morphological non-uniformity.

The term "non-uniform morphology" is used herein to describe the individual particles of the pore former and takes its usual meaning in the art, i.e. the shape of the pore former is not a uniform shape (particularly not a sphere as would be common at such particle sizes, but also not any other uniform shape such as a square, column etc.). Similarly, the term "non-geometrically uniform" is used to describe the voids formed through the process after the non-uniform morphological pore former particles are calcined away. These terms are used synonymously, but to refer to the different parts (pore former or voids) to avoid confusion.

In order that the invention may be more fully understood, the following Examples are provided by way of illustration only and with reference to the following drawings, in which:

Figure 1 is a plot of the mercury log differential Intrusion vs. Pore Diameter of some of the samples from Example 6, Table 13 for pores in the 0.05 to 0.5 $\mu$m diameter range;

Figure 2 is a back-scattered electron-scanning electron microscope (BSE-SEM) image of a cross-section of a coated filter substrate showing juxtaposed inlet and outlet channels of an asymmetric filter substrate and indicating the angle that bisects the vertex angle between the two edges of the square section of the channels, representing the orthogonally juxtaposed channel wall surfaces, along which the on-wall washcoat thickness in a channel "corner" is measured;

Figure 3 is an image analysis report of local three-dimensional pores measured in a washcoat thickness of Sample 1 in Table 4 after A. Varambhia et al., Johnson Matthey Technol. Rev., 2022, 66, (3), 355-371; and

Figure 4 is the image analysis report of local three-dimensional pores measured in a washcoat thickness of Sample 1 in Table 4.

## EXAMPLES

### Example 1 - Assessment of effect of different particle size pore formers on filtration and backpressure

Three different samples were prepared each comprising a cylindrical silicon carbide wall-flow filter substrate (165 mm diameter x 140.5 mm long) having an asymmetric channel arrangement of 46.5 cells per square centimetre (300 cells per square inch) (larger hydraulic diameter inlet channels, smaller hydraulic diameter outlet channels). The uncoated filter had a porosity of 42% and a mean pore size of 14 $\mu$m.

The inlet channels having a larger hydraulic diameter of the asymmetric channel arrangement of each bare substrate were coated with a washcoat to an axial length of 80%; and the outlet channels having a smaller hydraulic diameter were coated with the same washcoat as the inlet channels to an axial length of 20%. The washcoat in each sample included particulate gamma-alumina, citric acid, platinum nitrate, a pore former and a rheology modifier to achieve a desired viscosity for coating the substrate according to the method disclosed in WO 99/47260, i.e. comprising the steps of (a) locating a containment means on top of the substrate, (b) dosing a pre-determined quantity of a liquid component into said containment means, either in the order (a) then (b) or (b) then (a), and (c) by applying vacuum, drawing the entirety of said quantity of liquid component into at least a portion of the support and retaining substantially all of said quantity within the support, without recycle.

The proportions of the washcoat components were selected so that the coated substrate prior to calcination comprised 0.3 g/in$^3$ (18.3 g/L) gamma alumina, 250 g/ft$^3$ (8.83 g/L) citric acid, 3 g/ft$^3$ (0.11 g/L) Pt, 0.09 g/in$^3$ (5.49 g/L) pore former. That is, the applied washcoat contained 30wt% pore former relative to, and over and above, the gamma alumina washcoat solids required to obtain the target 0.3 g/in$^3$ (18.3 g/L) loading in the calcined end product. All coated parts were calcined statically at 500°C, a process which resulted in the combustion and removal of the pore former from the end product. Both the catalyst coatings on the inlet and outlet channels in the finished products were substantially on-wall, as visible by SEM.

The pore formers in each sample are described in the following Table 1.

Table 1

| Sample No. | Pore former name | Pore former particle size $D_{50}/D_{90}$ ($\mu$m)[†] |
|---|---|---|
| Sample 1 | Commercially available cellulose fibre | 10.7/23.8 |
| Sample 2 (Comparative) | "Microcrystalline cellulose, particle size 51 $\mu$m" (Sigma Aldrich) | 42.2/109.8 |
| Sample 3 (Comparative) | Alpha cellulose (Sigma Aldrich) | 78.5/285.1 |
| [†] D(v, 0.5)/D(v, 0.9) as determined by laser diffraction, assuming equivalent spherical diameter. | | |

Sample assessment - Cold Flow Back Pressure

A cold flow back pressure analysis of the coated and aged filters was done using a Superflow SF1020 apparatus, available commercially at https://superflow.com/products/flowbenches/.

At 20°C $\pm$ 2°C ambient temperature and at a flow rate of 600 m$^3$/h, the results are as set out in Table 2.

Table 2

| Sample No. | Cold Flow Backpressure @600 m$^3$/h (mBar (Kpa)) |
|---|---|
| Sample 1 | 57.8 (5.78) |
| Sample 2 (Comparative) | 63.0 (6.30) |
| Sample 3 (Comparative) | 64.8 (6.48) |

Sample assessment - Soot Loaded Back Pressure

A Soot Loaded Back Pressure ("SLBP") test was done using the apparatus and method described in EP1850068 and which is available for purchase from Cambustion®, Cambridge, UK as the "DPG Particulate Filter Testing System" (see https://www.cambustion.com/products/engine-exhaust-emissions/dpg-particulate-filter-testing-system), i.e.:

(i) an apparatus for generating and collecting particulate matter derived from combusting a liquid carbon-containing fuel, which apparatus comprising a fuel burner comprising a nozzle, which nozzle is housed in a container, which container comprising a gas inlet and a gas outlet, said gas outlet connecting with a conduit for transporting gas from the gas outlet to atmosphere, means for detecting a rate of gas flowing through the gas inlet and means for forcing an oxidising gas to flow from the gas inlet via the container, the gas outlet and the conduit to atmosphere, a station for collecting particulate matter from gas flowing through the conduit and means for controlling the gas flow-forcing means in response to a detected gas flow rate at the gas inlet, whereby the rate of gas flow at the gas inlet is maintained at a desired rate to provide sub-stoichiometric fuel combustion within the container, thereby to promote particulate matter formation; and

(ii) a method of generating and collecting particulate matter derived from combusting liquid carbon-containing fuel in an oxidising gas, which method comprising burning the fuel in a sub-stoichiometric quantity of oxidising gas in a fuel burner, said fuel burner comprising a nozzle, which nozzle being housed in a container, forcing an oxidising gas to flow from a gas inlet to the container to atmosphere via a gas outlet to the container and a conduit connected to the gas outlet, collecting particulate matter at a station located within the conduit, detecting a rate of oxidising gas flow at the gas inlet and controlling the rate of oxidising gas flow so that a desired rate of oxidising gas flow is maintained at the gas inlet.

The filter is inserted in the station for collecting particulate matter from gas flowing through the conduit. The fresh filter is first pre-conditioned at an air flow rate 80 kg/hr in a lean-burn combustion stream using low sulphur diesel fuel (10 ppm S) to raise the filter inlet temperature to 650°C, a temperature that is typically used on a vehicle to regenerate a soot loaded filter. This pre-conditioning step temperature is well above the soot combustion temperature and is to ensure that the filter on test is clean at the outset. Pressure sensors disposed upstream and downstream of the station monitor the backpressure across the filter. The SLBP test is carried out at a filter inlet temperature of 250°C at an air flow rate of 180 kg/hour combusting low sulphur diesel fuel (10 ppm S).

Filtration efficiency testing was also conducted on the DPG Particulate Filter Testing System, as follows. At a constant flow rate, an initial test detected the second-by-second particulate number (PN) upstream of the filter using a PN counter. The upstream PN raw data was averaged (mean) across a 11 second detection period to create second-by-second moving 11 second average window to reduce the effect of any variability in PN generation, with time "t" corresponding to the midpoint of the 11 second window. Sample filters were then tested by detecting the post-filter PN, also using a PN counter. The instantaneous filtration efficiency at time "t" in the test is given by the following calculation:

FEt [%] = ([Mean upstream PN at time t - Downstream PN at time t] / [Average upstream PN at time t]) x 100%

The results of sample SLBP and filtration efficiency analysis are presented in Table 3.

Table 3

| Sample No. | Backpressure (bar (Kpa)) at soot loading of 1.0 g/L | Filtration Efficiency (%) at 75 seconds |
|---|---|---|
| Sample 1 | 0.047 (4.7) | 95.9 |
| Sample 2 (Comparative) | 0.069 (6.9) | 95.9 |
| Sample 3 (Comparative) | 0.069 (6.9) | 93.9 |

It can be seen from the results presented in Tables 2 and 3 that cellulose fibres having an equivalent spherical diameter D(v, 0.5) of 0.5 to 14 $\mu$m when used as pore formers in coatings of ceramic honeycomb wall-flow filter substrate according to the present invention develop lower cold flow back pressure and soot loaded backpressure than cellulose fibre pore formers having higher D(v, 0.5).

Example 2 - Laboratory and Engine assessment of effect of different particle size pore formers on filtration and backpressure

Six different samples were prepared each comprising a cylindrical cordierite wall-flow filter substrate (143.8 mm diameter x 152.4 mm long) having an asymmetric channel arrangement of 46.5 cells per square centimetre (300 cells per square inch). The uncoated filter had a porosity of 47% and a mean pore size of 12 $\mu$m having an asymmetric channel arrangement of 46.5 cells per square centimetre (300 cells per square inch). The substrate used was different from that used in Example 1.

Each sample was prepared according to the method of Example 1, except in that different pore formers at 0.09g/in$^3$ (5.5g/L) (30wt% relative to 100wt% 0.3 g/in$^3$ (18.3g/L) gamma-alumina) having different particle sizes were used.

The pore formers in each sample are described in the following Table 4.

Table 4

| Sample No. | Pore former name | Pore former particle size $D_{50}/D_{90}$ ($\mu$m)[†] |
|---|---|---|
| Sample 1 (According to the invention) | Commercially available particulate insoluble cellulose fibre | 10.9 / 23.9 |
| Sample 4 (According to the invention) | Commercially available particulate insoluble cellulose fibre | 6.8 / 16.8 |
| Sample 5 (According to the invention) | Commercially available particulate insoluble cellulose fibre | 6.2 / 18.0 |
| Sample 6 (Comparative) | Commercially available particulate insoluble cellulose | 18.0 / 44.5 |
| [†] D(v, 0.5)/D(v, 0.9) as determined by laser diffraction, assuming equivalent spherical diameter. | | |

Sample assessment - Cold Flow Back Pressure

Cold flow backpressure was assessed at 20°C $\pm$ 2°C /a flow rate of 600 m$^3$/h in the same way as described in Example 1 and, the results are as set out in Table 5.

Table 5

| Sample No. | Cold Flow Backpressure @600 m$^3$/h (mBar (Kpa)) |
|---|---|
| Sample 1 | 49.9 (4.99) |
| Sample 4 | 54.4 (5.44) |
| Sample 5 | 57.0 (5.70) |
| Sample 6 | 48.7 (4.87) |

Sample assessment - Soot Loaded Back Pressure

The Soot Loaded Back Pressure test was done as described in Example 1 hereinabove. The results are set out in Table 6 below.

Table 6

| Sample No. | Backpressure (bar (Kpa)) at soot loading of 1.0 g/L | Filtration Efficiency (%) at 75 seconds |
|---|---|---|
| Sample 1 | 0.0417 (4.17) | 98.7 |
| Sample 4 | 0.0449 (4.49) | 99.6 |
| Sample 5 | 0.0468 (4.68) | 99.5 |
| Sample 6 (Comparative) | 0.0511 (5.11) | 96.3 |

Sample assessment - Engine testing

Three different samples were prepared each comprising a different cylindrical silicon carbide wall-flow filter substrate (304.8mm diameter x 228.6mm long) having an asymmetric channel arrangement (larger hydraulic diameter inlet channels, smaller hydraulic diameter outlet channels) of 46.5 cells per square centimetre (300 cells per square inch) but coated with the coatings described in Table 7. The uncoated filter had a porosity of 41% and a mean pore size of 9 $\mu$m. Each sample was prepared according to the method of Example 1.

Particle number (PN) evaluation was carried out using a 12L bench-mounted diesel engine running EUVI B7 fuel, with the diesel particulate filter (DPF) to be evaluated mounted downstream of a diesel oxidation catalyst using demountable canning, and an PN counter (AVL) mounted downstream of the DPF. Each DPF was pre-loaded with 4g/L of filter substrate volume of soot before evaluation over a "REAL Driving Emissions" (RDE) compliant test cycle, with the post-DPF PN10 data processed via moving averaging window method analysis to generate 90% percentile values of PN/kWh. The results are presented in Table 7.

Table 7

| Sample No. | Moving Average Window PN [PN# per kWh] |
|---|---|
| Sample 1 | $1.3 \times 10^{10}$ |
| Sample 4 | $5.9 \times 10^{9}$ |
| Sample 5 | $4.7 \times 10^{9}$ |

Based on the current EU7 proposals, all three samples meet the RDE PN# per KWh for 10 nm over a RDE test cycle limit of $9.0 \times 10^{11}$.

Example 3 - Pore former loading study

Six different samples were prepared each comprising a cylindrical silicon carbide wall-flow filter substrate (143.8 mm diameter x 150.5 mm long) having an asymmetric channel arrangement (larger hydraulic diameter inlet channels, smaller hydraulic diameter outlet channels) of 46.5 cells per square centimetre (300 cells per square inch). The uncoated filter had a porosity of 42% and a mean pore size of 11 $\mu$m. The substrate used was different from that used in Example 1 or Example 2.

The samples were prepared similarly to Example 1, except in that the pore former used in all of the Example 3 Samples was that of Table 1, Sample 1.1 but at different wt% levels of pore former addition to the 30wt% of Sample 1.1. The pore former loading added to each sample washcoat is as set out in the following Table 8 below. Sample 1.1 was included as a reference sample.

Table 8

| Sample No. | Pore former loading (g/in³ (g/L)) | % weight of pore former relative to 100% weight of gamma-alumina |
|---|---|---|
| Sample 7.1 | 0.09 (5.49) | 30.00 |

(continued)

| Sample No. | Pore former loading (g/in$^3$ (g/L)) | % weight of pore former relative to 100% weight of gamma-alumina |
|---|---|---|
| Sample 7.2 (Comparative) | 0.01 (0.61) | 3.33 |
| Sample 7.3 (Comparative) | 0.02 (1.22) | 6.66 |
| Sample 7.4 | 0.03 (1.83) | 10.00 |
| Sample 7.5 | 0.05 (3.05) | 16.66 |
| Sample 7.6 | 0.07 (4.27) | 23.33 |
| Sample 7.7 (not according to the invention) | 0.12 (7.32) | 40.00 |

Sample assessment - Soot Loaded Back Pressure and Filtration Efficiency

The Soot Loaded Back Pressure test was done as described in Example 1 hereinabove. The results are set out in Table 9 below.

Table 9

| Sample No. | Backpressure (bar (Kpa)) at soot loading of 0.9 g/L | Filtration Efficiency (%) at 75 seconds |
|---|---|---|
| Sample 7.1 | 0.07 (7) | 98.3 |
| Sample 7.2 (Comparative) | 0.15 (15) | 94.5 |
| Sample 7.3 (Comparative) | 0.13 (13) | Unavailable |
| Sample 7.4 | 0.12 (12) | 97.0 |
| Sample 7.5 | 0.09 (9) | 98.6 |
| Sample 7.6 | 0.08 (8) | 98.2 |

The results shown in Table 9 are unexpected. A skilled person would have expected that an increase in cellulose pore former loading would correlate with lower filtration efficiency, because the introduction of increased pore volume would create more paths for soot to pass through. However, what the results in Table 9 show is that lower soot loaded back pressure and a lower filtration efficiency that stabilises above about 15wt% pore former addition at about 98% filtration efficiency.

Reference Example 4 - Influence of Washcoat Particle Size Distribution on Backpressure and Filtration

Six different samples were prepared each comprising a cylindrical silicon carbide wall-flow filter substrate (143.8 mm diameter x 150.5 mm long) having an asymmetric channel arrangement (larger hydraulic diameter inlet channels, smaller hydraulic diameter outlet channels) of 46.5 cells per square centimetre (300 cells per square inch). The uncoated filter had a porosity of 42% and a mean pore size of 11 $\mu$m. The substrate used was different from that used in Example 1 or Example 2.

Each sample was prepared according to the method of Example 1 using the pore former of Sample 1. The proportions of the washcoat components were selected so that the coated substrate prior to calcination comprised 0.4 g/in$^3$ (24.4 g/L) gamma alumina of varying particle size distribution, 250 g/ft$^3$ (8.83 g/L) citric acid, 3 g/ft$^3$ (0.11 g/L) 10:1 Pt:Pd, 0.125 g/in$^3$ (7.63 g/L) pore former. That is, the applied washcoat contained 31.25wt% pore former relative to, and over and above, the gamma alumina washcoat solids required to obtain the target 0.4 g/in$^3$ (24.4 g/L) loading in the calcined end product. The difference between each sample was that the D(v, 0.9) of the gamma-alumina had a difference of 2 $\mu$m from the preceding sample in the study, as set out in the following Table 10 below. The D(v, 0.9) of the gamma-alumina was adjusted by ball milling.

Table 10

| Sample No. | D(v, 0.9) of the gamma-alumina ($\mu$m) |
|---|---|
| Sample 8.1 | 20 |

(continued)

| Sample No. | D(v, 0.9) of the gamma-alumina ($\mu$m) |
|---|---|
| Sample 8.2 | 18 |
| Sample 8.3 | 16 |
| Sample 8.4 | 14 |
| Sample 8.5 | 12 |
| Sample 8.6 | 10 |

Sample assessment - Soot Loaded Back Pressure and Filtration Efficiency

The Soot Loaded Back Pressure test was done as described in Example 1 hereinabove. The results are set out in Table 11 below.

Table 11

| Sample No. | Backpressure (bar (Kpa)) at soot loading of 1.0 g/L | Filtration Efficiency (%) at 75 seconds |
|---|---|---|
| Sample 8.1 | 0.051 (5.1) | 93.5 |
| Sample 8.2 | 0.055 (5.5) | 95.0 |
| Sample 8.3 | 0.054 (5.4) | 96.0 |
| Sample 8.4 | 0.053 (5.3) | 93.8 |
| Sample 8.5 | 0.060 (6.0) | 97.2 |
| Sample 8.6 | 0.067 (6.7) | 95.9 |

It can be seen from the results shown in Table 11 that the trend is for increasing filtration efficiency with decreasing D(v, 0.9) with a simultaneous increase in backpressure. In general, the filtration efficiency of the reference embodiments in this Example is too low and the soot loaded backpressure too high for practical application of the 0.4 g/in$^3$ (24.4g/L) washcoat loading. However, in view of the results in this Example, to target diesel exhaust gas particles to meet existing and future emission standards at acceptable adhesion (see Example 5 hereinbelow), Applicant prefers a D(v, 0.9) particle size range of 9 to 15 $\mu$m, more preferably 10 to 14 $\mu$m for washcoats for use in the present invention.

Example 5 - Adhesion testing

Prior to washcoat adhesion testing in the laboratory apparatus described below, each sample was held by hand and either tapped on a table or slapped with a hand. If any washcoat fell out of the sample, the sample immediately failed the adhesion test and no laboratory apparatus test was done. This test is referred to as the "tap test".

Washcoat adhesion of samples prepared similarly to Example 1 was assessed by a method utilising a nozzle discharging high-pressure air in a laboratory test apparatus. A high-pressure air flow rate of 425 L/minute was used to deliver a jet of air perpendicularly and downwardly onto the end face of a vertically disposed filter from 0.5 inches (1.3 cm) above the end face. The nozzle was controlled robotically to move laterally across and relative to the end surface of the filter at a rate of 6.7 mm/second in a zig-zag fashion so that the whole end face of the filter is eventually exposed to the high-pressure air treatment.

The filter sample to be tested was first stabilised by heating in an oven at 115°C for 30 minutes followed by weighing the sample. The washcoat adhesion was then tested by exposing the filter sample to the high-pressure air in the following order: outlet end; then inlet end; and finally outlet end, before the sample was again heat stabilised before reweighing. The difference in weight before and after exposure to the high-pressure air testing (i.e. weight loss) was calculated as a percentage of the total calcined coating applied to the filter. The results for various samples from preceding Examples are set out in Table 12 hereinbelow.

Comparative Samples 2 and 3 failed the "tap test" and so no full adhesion test was done on them.

Table 12

| Sample No. | Adhesion loss [%] |
|---|---|
| 1 | 0.4 |
| 4 | 0.5 |
| 5 | 0.3 |
| 7.1 | 0.5 |
| 7.4 | 0.4 |
| 7.7 (not according to the invention) | 9.8 |
| 8.3 (not according to the invention) | 21.7 |
| 8.4 (not according to the invention) | 2.8 |
| 8.5 (not according to the invention) | 1.5 |
| 8.6 (not according to the invention) | 0.3 |

Any adhesion loss (%) above 2.0 is considered a "fail". It can be seen from the results shown in Table 12 that adhesion loss is seen when >35wt% pore former is used (Sample 7.7).

Example 6 - Mercury (Hg) porosimetry

300 cells per square inch (equivalent to 46.5 cells per square centimetre) silicon carbide wall flow filters were coated with the tested formulations of Examples 9.1-9.8. Cylindrical cores of approximately 10mm diameter x 10mm length were cut from the filters for analysis. The inlet "face" of the coated substrate had an area of 0.79 square centimetres, so 0.79 x 46.5 cells per centimetre = approximately 36 channels, half of which will have been "plugged" in view of the "chequer board" pattern of plugging at an end face of a wall flow filter. That is, the analysis was done on at least 18 coated channels cells from the inlet end of a coated filter sample. A full cross-section of these cores would not fit in the 3cc (cubic centimetre) penetrometer cup, so the analyst took a serrated surgical scalpel, similar to a chisel blade, to cut the samples into substantial chunks, which were then packed into the cup. The sample chunks retained their recognisable cell channel appearance at their "open" inlet ends and there was no observed further breakage following analysis. Hence the samples were representative of the coated portion of the wall flow filter as a whole. [A fragment of the filter substrate which would not include the on-wall coating would not be representative of the filter and would not demonstrate the required volume of pores of 0.05 to 0.5$\mu$m. This is because the pores of such substrates are larger. In particular, the mean pore size of the substrate D50 is typically from 6-15 microns].

The porosity data was measured by mercury porosimetry using a Micromeritics AutoPore 9600 in accordance with ASTM Method D4284-03; Test Method for Determining Pore Volume Distributions of Catalysts by Mercury Intrusion Porosimetry. Intrusion curves were measured over the pressure range of 0.5 to 60000 psia (pounds per square inch absolute) (3.45kPa to 414MPa) followed by extrusion down to atmospheric pressure. An equilibration time of 15 seconds was used for each data point on both the intrusion and extrusion curves, the mercury contact angle was taken to be 130° and the mercury surface tension taken as 485 dynes/cm.

Samples were dried at 115°C overnight in an oven prior to analysis. Temperature and pressure effects that are manifested during the porosimetry run were accounted for by blank correction runs on empty penetrometer tubes which were subsequently subtracted from the experimental data. The data generated up to 60000 psia (414MPa) included the pore volume and size distribution of the alumina component of the washcoat. The alumina is unaffected by the addition of pore formers. As such the pore size range of interest where the pore former impacts the washcoat porosity was found to be 0.05 $\mu$m to 5 $\mu$m diameter which falls within the pressure range of 0.5 psia to 1000 psia (3.45kPa to 6890 kPa).

The Micromeritics AutoPore 9600 instrument has a low and a high-pressure circuit. The low-pressure circuit side pressurises the sample to a maximum of 36 psia using compressed air. The high-pressure circuit side uses an oil filled chamber. The low-pressure circuit is used to analyse pores of up to 300$\mu$m, i.e. at the 0.5 psia end of the pressure range mentioned in this Example 6. As this pressure is below atmospheric pressure (i.e. 14.7 psia), it will be understood that the 0.5 psia end of the range is done under vacuum. In order to analyse the full pressure range from 0.5 to 60000 psia, it will also be recognised that the sample/penetrometer has to be switched from the low-pressure circuit to the high-pressure circuit - this because the high-pressure circuit cannot resolve down to the 300$\mu$m end of the analysis range. To ensure that there is a seamless transition of the analysis obtained in passing from the low-pressure circuit to the high-pressure circuit, care is taken to ensure that the pressure transducer value in each circuit is matched when the switch is performed. Once the highest pressure is done, the penetrometer is returned to atmospheric pressure and the sample removed. The volume of pores between 0.05 to 0.5 $\mu$m as a percentage of intrusion volume data was calculated from the geometric density derived from the mercury porosimetry intrusion data and the skeletal density as measured by helium pycnometry using a Micromeritics AccuPyc II 1340 pycnometer in accordance with ISO 12154:2014 - Determination of Density by Volumetric Displacement - Skeletal Density by gas Pycnometry. Samples were dried at 115°C overnight in an oven prior to analysis.

Six samples were prepared according to the invention using the method and materials described for Sample 1, Example 1. Details of the loadings and pore former content are set out in Table 13. The uncoated filter used in each case was a silicon carbide filter of asymmetric design having a porosity of 41%, a mean pore size of 9 $\mu$m, 300 cells per square inch and a wall thickness of 7 thousandths of an inch (mil) (0.1778 mm).

Table 13

| Sample No. | Gamma alumina loading in calcined product (g/in$^3$ (g/L)) | Pore former wt% in washcoat |
| --- | --- | --- |
| 9.1 | 0.1 (6.1) | None |
| 9.2 | 0.2 (12.2) | None |
| 9.3 | 0.3 (18.3) | None |
| 9.4 | 0.3 (18.3) | 30 |
| 9.5 | 0.3 (18.3) | 20 |
| 9.6 | 0.3 (18.3) | 10 |
| 9.7 | 0.2 (12.2) | 30 |
| 9.8 | 0.1 (6.1) | 30 |

The results are shown in Table 14, including the bare substrate as a reference.

Table 14

| Sample No. | Total Pore volume (cm$^3$/g) | Volume of pores between 0.05 to 0.5 $\mu$m as a percentage of mercury intrusion volume | Percentage porosity |
| --- | --- | --- | --- |
| Bare substrate | 0.211 | 3.8 | 35.9 |
| 9.1 | 0.227 | 14.2 | 37.5 |
| 9.2 | 0.227 | 15.8 | 39.2 |
| 9.3 | 0.224 | 15.7 | 41.4 |
| 9.4 | 0.278 | 21.5 | 43.1 |
| 9.5 | 0.254 | 19.4 | 41.6 |
| 9.6 | 0.247 | 17.1 | 40.9 |
| 9.7 | 0.247 | 18.2 | 43.0 |
| 9.8 | 0.236 | 15.6 | 40.6 |

From Table 14 it can be seen that by increasing the quantity of pore former at a constant washcoat loading, the trend is for the total pore volume, volume of pores between 0.05 to 0.5 $\mu$m as a % of mercury intrusion volume and the % porosity to increase, but if the quantity of pore former addition is too high, washcoat adhesion is impacted (see results of Example 5 below). It can also be seen that as washcoat loading increases at a constant quantity of added pore former, the trend is for the total pore volume, volume of pores between 0.05 to 0.5 $\mu$m as a % of mercury intrusion volume and the % porosity to increase.

Example 7 - Support Material Screening - Influence of Bulk Density on SLBP, Filtration Efficiency and Adhesion

A series of samples were prepared similarly to Example 1 as set out in Table 15 using the cylindrical cordierite wall-flow filter substrate (143.8 mm diameter x 152.4 mm long) used in Example 2. Each filter substrate sample was coated with washcoats having the formulation and axial length coatings described in Example 1 for Sample 1, except in that the gamma alumina support material was exchanged for alternative support materials as set out in Table 15. The support materials were each wet-milled to the D50 and D90 indicated before pore former addition.

Table 15

| Sample No. | Support Material Description | Pre-milled Loose Bulk Density (Manufacturer's specification) | Post-milled D50/D90 ($\mu$m) |
|---|---|---|---|
| 10.1 | Gamma alumina | 550-750 g/L | 5.37/15.23 |
| 10.2 | 5wt% silica-doped alumina | >350 g/L | 6.92/16.51 |
| 10.3 (Comparative) | Higher pore volume 5wt% silica-doped alumina | 140 g/L | 4.30/15.18 |
| 10.4 (Comparative) | Approx. 0.1wt% rare earth element-stabilised cerium (IV) oxide ($CeO_2$) | 900-1300 g/L | 6.75/16.43 |
| 10.5 (Comparative) | Approx. 15wt% rare earth element-stabilised $ZrO_2$ | 250 g/L | 6.36/15.83 |

The cold flow back pressure, SLBP and filtration efficiency for each sample was assessed by DPG according to the methodology described in Example 1; and adhesion testing was done according to the methodology of Example 5. The results are presented in Table 16. It will be noted that Sample 10.1 from Example 7 and Sample 1 from Example 1 are similarly formulated. However, Sample 10.1 is a freshly prepared sample and so different from Sample 1. It is to be expected, therefore, that there may be some slight variation in reported cold flow back pressure with Table 2; and filtration efficiency with Table 3.

From the data shown in Table 15, Applicant notes that the D50 and D90s for each of the 10.1 to 10.5 Samples are broader similar, so it would be expected that any difference in backpressure, filtration efficiency and adhesion results from differences in the properties of the raw materials used.

Table 16

| Sample No. | Cold Flow Backpressure @600 m³/h (mBar (KPa)) | Backpressure (bar (KPa)) at soot loading of 0.8 g/L (SLBP) | Filtration Efficiency (%) at 75 seconds | Adhesion Loss [%] |
|---|---|---|---|---|
| Sample 10.1 (Reference) | 59.5 (5.95) | 0.045 (4.5) | 99.1 | Not tested (see Table 12) |
| Sample 10.2 | 59.9 (5.99) | 0.045 (4.5) | 99.4 | 0.8 |
| Sample 10.3 (Comparative) | 80.3 (8.03) | 0.071 (7.1) | 99.5 | 2.4 |
| Sample 10.4 (Comparative) | 45.7 (4.57) | 0.032 (3.2) | 95.9 | 74.6 |
| Sample 10.5 (Comparative) | Not tested | 0.047 (4.7) | 98.7 | 15.6 |

From the results shown in Table 16 it can be seen that - despite having good low cold flow backpressure and soot loaded back pressure - the $CeO_2$ support material sample 10.4 had poor filtration efficiency and significant adhesion issues. When observed under a microscope, the surface coatings of 10.4 were found to exhibit cracks, with an appearance of dried mud or so-called "crazy paving". The cracks may be the reason for both the adhesion losses and the lack of filtration efficiency, while also potentially explaining the lower backpressure. Applicant sought to improve adhesion by combining increasing proportions of Sample 10.1 to the $CeO_2$ of 10.4, but this did not overcome the negative results for 10.4 (results not shown).

Although Sample 10.5 had acceptable soot loaded backpressure and filtration efficiency compared with the Sample 10.1 reference, adhesion losses were unacceptable. However, Applicant found that a combination of the rare earth element-stabilised $ZrO_2$ support material with the gamma alumina support material of Sample 10.1 in 80:20 and 60:40 proportions ($ZrO_2$:$Al_2O_3$) increasingly improved adhesion eventually (for the 60:40 embodiment) to meet adhesion requirements (adhesion loss of 0.6%); and soot loaded back pressure and filtration efficiency were also improved compared with the Sample 10.1 reference (results not shown).

The higher pore volume 5wt% silica-doped alumina sample (Sample 10.3) also inadequate adhesion and surprisingly high backpressure.

Relative to the gamma alumina and 5wt% silica-doped alumina samples, i.e. Samples 10.1 and 10.2, it is noted that the support materials of Samples 10.3, 10.4 and 10.5 support materials on their own, i.e. without being mixed with gamma alumina, have a pre-milled loose bulk density below about 850 g/L and above about 275 g/L. Without wishing to be bound by any theory, Applicant believes that there exists a pre-milled loose bulk density parameter range of 275 to 850 g/L from which refractory metal oxide support materials that have acceptable backpressure, filtration efficiency and adhesion for use in the present invention may be selected with advantage. The results shown in Table 16 and discussed above also indicate that pre-milled bulk density materials below the 275 g/L range can be mixed with support materials within the 275-850 g/L range to improve the former's adhesion characteristics.

Example 8 - FIB-SEM

Samples according to Table 2, Examples 1 and 5 were analysed using Focused Ion Beam-back scattered electron (BSE) Scanning Electron Microscopy (FIB-SEM) using a gallium beam and 50 nm between image "slices", and as described in A. Varambhia et al., Johnson Matthey Technol. Rev., 2022, 66, (3), 355-371. Each sample to be analysed was set in resin following vacuum application to ensure all pores in the sample were filled with resin. The results are shown in Table 17 below and Figures 3 and 4.

Table 17

| Example Sample No. | Three-dimensional pore sizes ($\mu$m) |
|---|---|
| 1 | 0.1 - 6.4 |
| 5 | 0.1 - 5.7 |

From these data it can be seen that combustion of the cellulose pore former and evolution of gas from citric acid in an applied washcoat slurry during calcination results in a pore structure within the washcoat layer. It can also be seen that the pore sizes are not necessarily proportionate to the particle size distributions of the dry pore formers due to compression within system of the washcoat slurry. However, it can be seen from Figures 3 and 4 that the pore sizes derived from the pore former of Sample 1 in Table 4 are larger than those of Sample 5 in Table 4.

Example 9 - Washcoat layer thickness

Three 152.4 mm long segment samples of an asymmetric silicon carbide filter were coated to 60% of the segment's axial length from the inlet end and 40% thereof from the outlet end with washcoats comprising described in Example 1, wherein the amount of pore former was varied. The inlet channels had a larger hydraulic diameter than the outlet channels.

As is also well known, silicon carbide filters are manufactured as, typically, square cross-section segments which are cemented together to form, e.g. a cylindrical whole filter. This is because silicon carbide itself has a relatively high coefficient of thermal expansion (CTE) and so, if the segment arrangement was not used, catastrophic cracks may form caused by stresses within a canned filter during use.

The quantities of pore formers used in each sample are set out in Table 18 below. Back scattered electron (BSE)-SEM images of cross-sections of channels of the coated sample parts. SEM images were taken at an axial point 50.8 mm into the coated segment sample from the inlet of the segments coated with washcoats containing 0.4 g/in$^3$ (24.4g/L) (not according to the invention) and 0.2 g/in$^3$ (12.2g/L) of pore formers, i.e. of both smaller and larger hydraulic diameter channels; and at 50.8 mm from the outlet end for the 0.3 g/in$^3$ (18.3g/L) pore former loaded sample. Washcoat coating thickness was measured at an angle that bisects the vertex angle between the two edges of the square section of the channels, representing the orthogonally juxtaposed channel wall surfaces, as shown in Figure 1. Thickness measurements were taken from five cells per location within each part and four corner measurements per cell/channel.

Table 18

| | Gamma alumina loading (g/in$^3$)/Hydraulic diameter of channels | | | | | |
|---|---|---|---|---|---|---|
| | 0.4 (not according to the invention) | | 0.3 | | 0.2 | |
| | Large | Small | Large | Small | Large | Small |
| **Corner washcoat thickness ($\mu$m)** | 42.4-69.3 | - | - | 41.7-59.7 | 11.4-27.9 | 14.1-42.2 |

(continued)

| | Gamma alumina loading (g/in$^3$)/Hydraulic diameter of channels | | | | | |
| --- | --- | --- | --- | --- | --- | --- |
| | 0.4 (not according to the invention) | | 0.3 | | 0.2 | |
| | Large | Small | Large | Small | Large | Small |
| **Corner washcoat thickness (mean ) average ($\mu$m)** | 53.6 | - | - | 50.6 | 17.9 | 24.0 |

It can be seen from the results shown in Table 18 that with increasing pore former addition, the thickness of the coating increases. It is known from Applicant's WO 2015/082892 that on-wall coating is thicker on channels of an asymmetric filter substrate having a smaller hydraulic diameter than channels having a larger hydraulic diameter. However, the thickest washcoat loading (0.4 g/in$^3$ (24.4g/L)) corresponding to Example 8.3-8.6 in Reference Example 4 generally exhibits a soot loaded backpressure that is too high or a filtration efficiency that is too low and/or problems with adhesion (see Example 5, hereinabove).

## Claims

1. A method of making a ceramic honeycomb wall-flow filter substrate having an axial length L supporting an on-wall coating, a fragment of which on-wall coated filter substrate analysed by mercury porosimetry has a volume of pores of 0.05 to 0.5 $\mu$m diameter as a percentage of a mercury intrusion volume of the fragment of at least 15.0%, which wall-flow filter substrate having a first end and a second end and comprising an array of axially extending first channels and second channels, each first and second channel being defined in part by a porous channel wall having axially-extending porous channel wall surfaces, each first channel sharing a porous channel wall with an adjacent second channel, wherein, in a scanning electron microscope image of a cross-section of the coated substrate, each channel has a geometric hollow section shape having at least one vertex defined in part by a vertex angle between two channel surface edges, wherein the first channels are end-plugged at the second end of the substrate and the second channels are end-plugged at the first end of the substrate, which method comprising the steps of:

   (i) preparing a slurry comprising water, a carboxylic acid, inorganic oxide particles, or a mixture of two or more inorganic oxide particles, having a D(v, 0.9) determined by Laser Diffraction Particle Size Analysis of 8 to 20 $\mu$m; and 10 to 35 % by weight relative to 100% weight of the inorganic oxide particles of a particulate cellulose pore former of three dimensionally non-uniform shape and having an equivalent spherical diameter D(v, 0.5) of 0.5 to 14 $\mu$m as determined by laser diffraction and having a modal aspect ratio (width/length) as determined by direct particle measurement using a Flow Imaging Microscopy particle shape analyser of 0.3 to 0.9, wherein the particulate cellulose pore former is insoluble in the water, carboxylic acid and additional washcoat components of the slurry;
   (ii) coating the slurry on at least the porous channel walls of the first channels of the substrate, wherein the substrate has a mean pore size (D50) of 6 to 15 $\mu$m prior to any coating and a porosity less than 60% prior to any coating; and
   (iii) drying and calcining the slurry-coated substrate,

   whereby sufficient slurry is coated on the substrate so that the product of step (iii) has a coating loading of 0.07 to 0.4 g/in$^3$ (4.3 to 24.4 g/L), relative to a substrate weight prior to step (ii), wherein a mean average on-wall coating thickness of the product of step (iii) measured at an angle that bisects the vertex angle on the scanning electron microscope cross-section image of the coated substrate is 5 to 70 $\mu$m.

2. A method according to claim 1, wherein step (ii) includes the step of coating the porous channel walls of the second channels of the filter substrate with a slurry according to step (i), wherein the slurry for coating the porous channel walls of the second channels has the same or a different composition from the slurry coated on the porous channel walls of the first channels.

3. The method according to claim 1 or 2, wherein the inorganic oxide particles or a component of the mixture of inorganic oxide particles have a pre-milled loose bulk density of 275 to 850 g/L.

4. The method according to any one of the preceding claims, wherein the axially extending first channels of the wall-flow filter substrate have a hydraulic diameter greater than the second channels, wherein the hydraulic diameter is defined as $D_H$=4A/P, where A is the cross-sectional area of the flow, and P is the wetted perimeter of the cross-section.

5. The method according to claim 1, 2 or 3, wherein the axially extending first channels of the wall-flow filter substrate are a combination of channels having greater and lesser hydraulic diameters and the hydraulic diameter of the second channels is greater than the first channels having a lesser hydraulic diameter, wherein the hydraulic diameter is defined as $D_H$=4A/P, where A is the cross-sectional area of the flow, and P is the wetted perimeter of the cross-section.

6. The method according to any one of the preceding claims, wherein the on-wall coating is an on-wall catalyst coating and the slurry of step (i) comprises one or more non-rhodium platinum group metal salts at a platinum group metal salt concentration selected so that the product of step (iii) has a total platinum group metal loading of 0.5 to 10 g/ft$^3$ (0.018 to 0.353g/L).

7. The method according to any one of the preceding claims, wherein the filter substrate is a silicon carbide filter substrate having a porosity of 38 to 45% prior to coating.

8. The method according to claim 7, wherein the coated filter substrate has a percentage porosity of less than 45.0%.

9. The method according to claim 7 or 8, wherein the coated filter substrate has a total pore volume of at least 0.230 cm$^3$/g determined by a combination of helium pycnometry and mercury densitometry.

10. The method according to any one of claims 1 to 6, wherein the filter substrate is a cordierite filter substrate having a porosity of 46 to 60% prior to coating.

11. An on-wall coated ceramic honeycomb wall-flow filter substrate for treating exhaust gas comprising particulate matter emitted from an internal combustion engine, which wall-flow filter substrate having a first end and a second end and a length L therebetween and comprising an array of axially extending first channels and second channels, each first and second channel being defined in part by a porous channel wall having axially-extending porous channel wall surfaces, each first channel sharing a porous channel wall with an adjacent second channel, wherein, in a scanning electron microscope image of a cross-section of the coated substrate, each channel has a geometric hollow section shape having at least one vertex defined in part by a vertex angle between two channel surface edges, wherein the first channels are end-plugged at the second end of the substrate and the second channels are end-plugged at the first end of the substrate, wherein at least the channel wall surfaces of the first channels support 0.07 to 0.4 g/in$^3$ (4.3 to 24.4 g/L) of an on-wall-type washcoat relative to a substrate weight prior to coating, which washcoat comprising inorganic oxide particles, or a mixture of two or more inorganic oxide particles, wherein a mean average on-wall coating thickness measured at an angle that bisects the vertex angle on the scanning electron microscope cross-section image of the coated substrate is 5 to 70 $\mu$m, wherein a fragment of the on-wall coated filter substrate analysed by mercury porosimetry has a volume of pores of 0.05 to 0.5 $\mu$m diameter as a percentage of a mercury intrusion volume of the fragment of at least 15.0% and wherein the on-wall washcoat coating comprises voids of three-dimensionally non-geometrically uniform shape and of an equivalent spherical diameter D(v, 0.5) of 0.1 to 8 $\mu$m and a modal aspect ratio (width/length) of 0.3 to 0.9 as determined by Focused Ion Beam-Scanning Electron Microscopy (FIB-SEM).

12. An exhaust system for an internal combustion engine comprising a ceramic honeycomb wall-flow filter substrate according to claim 11, wherein the first end of the substrate is oriented to the upstream side.

13. An internal combustion engine comprising an exhaust system according to claim 12.

**Patentansprüche**

1. Verfahren zum Fertigen eines Keramik-Wabenwandstromfilter-Substrats, das eine axiale Länge L aufweist, das eine Auf-Wand-Beschichtung trägt, wobei ein Fragment dieses Auf-Wand-beschichteten Filtersubstrats, das durch Quecksilberporosimetrie analysiert wird, ein Volumen von Poren von 0,05 bis 0,5 $\mu$m Durchmesser als einen Prozentsatz eines Quecksilberdruckvolumens des Fragments von mindestens 15,0 % aufweist, wobei das Wandstromfiltersubstrat ein erstes Ende und ein zweites Ende aufweist und umfassend eine Anordnung von sich axial erstreckenden ersten Kanälen und zweiten Kanälen, wobei jeder erste und zweite Kanal teilweise durch eine Porös-Kanalwand, die sich axial erstreckende Porös-Kanalwand-Oberflächen aufweist, definiert ist, wobei jeder erste Kanal eine Porös-Kanalwand mit einem angrenzenden zweiten Kanal teilt, wobei, in einem Rasterelektronenmikroskopbild eines Querschnitts des beschichteten Substrats, jeder Kanal eine geometrische Hohlquerschnittsform aufweist, die mindestens einen Scheitelpunkt, der teilweise durch einen Scheitelwinkel zwischen zwei Kanaloberflächenkanten definiert ist, aufweist, wobei die ersten Kanäle an dem zweiten Ende des Substrats endverschlossen sind und die zweiten Kanäle an dem ersten Ende des Substrats endverschlossen sind, wobei das Verfahren die Schritte umfasst:

(i) Herstellen einer Aufschlämmung, umfassend Wasser, eine Carbonsäure, anorganische Oxidpartikel oder eine Mischung aus zwei oder mehr anorganischen Oxidpartikeln, die einen D(v, 0,9) von 8 bis 20 $\mu$m, der durch Laserbeugungspartikelgrößenanalyse bestimmt wird, aufweisen; und 10 bis 35 Gew.-%, bezogen auf 100 % Gewicht der anorganischen Oxidpartikel eines Partikelcelluloseporenbildners mit dreidimensional ungleichmäßiger Form und aufweisend einen äquivalenten sphärischen Durchmesser D(v, 0,5) von 0,5 bis 14 $\mu$m, wie durch Laserbeugung bestimmt, und aufweisend einen modalen Formfaktor (Breite/Länge), wie durch direkte Partikelmessung unter Verwendung eines Strömungsvisualisierungsmikroskopiepartikelformanalysators bestimmt, von 0,3 bis 0,9, wobei der Partikelcelluloseporenbildner in dem Wasser, der Carbonsäure und zusätzlichen Washcoat-Komponenten der Aufschlämmung unlöslich ist;
(ii) Beschichten der Aufschlämmung auf mindestens die Porös-Kanalwände der ersten Kanäle des Substrats, wobei das Substrat vor jeglicher Beschichtung eine mittlere Porengröße (D50) von 6 bis 15 $\mu$m und vor jeglicher Beschichtung eine Porosität von weniger als 60 % aufweist; und
(iii) Trocknen und Kalzinieren des mit Aufschlämmung beschichteten Substrats,

wodurch ausreichend Aufschlämmung auf das Substrat beschichtet wird, sodass das Produkt von Schritt (iii) eine Beschichtungsbeladung von 0,07 bis 0,4 g/in$^3$ (4,3 bis 24,4 g/L), bezogen auf ein Substratgewicht vor Schritt (ii), aufweist, wobei eine mittlere durchschnittliche Auf-Wand-Beschichtungsdicke des Produkts von Schritt (iii), gemessen in einem Winkel, der den Scheitelwinkel auf dem Rasterelektronenmikroskopquerschnittsbild des beschichteten Substrats halbiert, 5 bis 70 $\mu$m beträgt.

2. Verfahren nach Anspruch 1, wobei Schritt (ii) den Schritt des Beschichtens der Porös-Kanalwände der zweiten Kanäle des Filtersubstrats mit einer Aufschlämmung nach Schritt (i) einschließt, wobei die Aufschlämmung zum Beschichten der Porös-Kanalwände der zweiten Kanäle die gleiche oder eine andere Zusammensetzung als die Aufschlämmung, die auf die Porös-Kanalwände der ersten Kanäle beschichtet ist, aufweist.

3. Verfahren nach Anspruch 1 oder 2, wobei die anorganischen Oxidpartikel oder eine Komponente der Mischung aus anorganischen Oxidpartikeln eine lose Schüttdichte vor Mahlen von 275 bis 850 g/L aufweisen.

4. Verfahren nach einem der vorstehenden Ansprüche, wobei die sich axial erstreckenden ersten Kanäle des Wandstromfiltersubstrats einen größeren hydraulischen Durchmesser als die zweiten Kanäle aufweisen, wobei der hydraulische Durchmesser als $D_H$=4A/P definiert ist, wobei A die Querschnittsfläche der Strömung ist und P der benetzte Umfang des Querschnitts ist.

5. Verfahren nach Anspruch 1, 2 oder 3, wobei die sich axial erstreckenden ersten Kanäle des Wandstromfiltersubstrats eine Kombination aus Kanälen sind, die größere und kleinere hydraulische Durchmesser aufweisen, und der hydraulische Durchmesser der zweiten Kanäle größer als die ersten Kanäle ist, die einen kleineren hydraulischen Durchmesser aufweisen, wobei der hydraulische Durchmesser als $D_H$= 4A/P definiert ist, wobei A die Querschnittsfläche der Strömung ist und P der benetzte Umfang des Querschnitts ist.

6. Verfahren nach einem der vorstehenden Ansprüche, wobei die Auf-Wand-Beschichtung eine Auf-Wand-Katalysatorbeschichtung ist und die Aufschlämmung von Schritt (i) ein oder mehrere Nicht-Rhodium-Platingruppenmetallsalze in einer Platingruppenmetallsalzkonzentration umfasst, die ausgewählt ist, dass das Produkt von Schritt (iii) eine Gesamtplatingruppenmetallbeladung von 0,5 bis 10 g/ft$^3$ (0,018 bis 0,353 g/L) aufweist.

7. Verfahren nach einem der vorstehenden Ansprüche, wobei das Filtersubstrat ein Siliciumcarbidfiltersubstrat ist, das vor dem Beschichten eine Porosität von 38 bis 45 % aufweist.

8. Verfahren nach Anspruch 7, wobei das beschichtete Filtersubstrat eine prozentuale Porosität von weniger als 45,0 % aufweist.

9. Verfahren nach Anspruch 7 oder 8, wobei das beschichtete Filtersubstrat ein Gesamtporenvolumen von mindestens 0,230 cm$^3$/g, bestimmt durch eine Kombination aus Heliumpyknometrie und Quecksilberdensitometrie, aufweist.

**10.** Verfahren nach einem der Ansprüche 1 bis 6, wobei das Filtersubstrat ein Cordieritfiltersubstrat ist, das vor dem Beschichten eine Porosität von 46 bis 60 % aufweist.

**11.** Auf Wand beschichtetes Keramik-Wabenwandstromfilter-Substrat zum Behandeln von Abgas, umfassend Feinstaub, der von einem Verbrennungsmotor emittiert wird, wobei das Wandstromfiltersubstrat ein erstes Ende und ein zweites Ende und eine Länge L dazwischen aufweist und umfassend eine Anordnung von sich axial erstreckenden ersten Kanälen und zweiten Kanälen, wobei jeder erste und zweite Kanal teilweise durch eine Porös-Kanalwand, die sich axial erstreckende Porös-Kanalwand-Oberflächen aufweist, definiert ist, wobei jeder erste Kanal eine Porös-Kanalwand mit einem angrenzenden zweiten Kanal teilt, wobei, in einem Rasterelektronenmikroskopbild eines Querschnitts des beschichteten Substrats, jeder Kanal eine geometrische Hohlquerschnittsform aufweist, die mindestens einen Scheitelpunkt, der teilweise durch einen Scheitelwinkel zwischen zwei Kanaloberflächenkanten definiert ist, aufweist, wobei die ersten Kanäle an dem zweiten Ende des Substrats endverschlossen sind und die zweiten Kanäle an dem ersten Ende des Substrats endverschlossen sind, wobei mindestens die Kanalwandoberflächen der ersten Kanäle 0,07 bis 0,4 g/in$^3$(4,3 bis 24,4 g/L) eines Washcoats Typ Auf-Wand, bezogen auf ein Substratgewicht vor dem Beschichten, tragen, wobei dieser Washcoat anorganische Oxidpartikel oder eine Mischung aus zwei oder mehr anorganischen Oxidpartikeln umfasst, wobei eine mittlere durchschnittliche Auf-Wand-Beschichtungsdicke, gemessen in einem Winkel, der den Scheitelwinkel auf dem Rasterelektronenmikroskopquerschnittsbild des beschichteten Substrats halbiert, 5 bis 70 $\mu$m beträgt, wobei ein Fragment des auf Wand-beschichteten Filtersubstrats, das durch Quecksilberporosimetrie analysiert wird, ein Volumen von Poren von 0,05 bis 0,5 $\mu$m Durchmesser als einen Prozentsatz eines Quecksilberdruckvolumens des Fragments von mindestens 15,0 % aufweist, und wobei die Auf-Wand-Washcoat-Beschichtung Hohlräume mit dreidimensional nicht geometrisch einheitlicher Form und einem äquivalenten sphärischen Durchmesser D(v, 0,5) von 0,1 bis 8 $\mu$m und einem modalen Formfaktor (Breite/Länge) von 0,3 bis 0,9, wie durch Fokus-Ionenstrahl-Rasterelektronenmikroskopie (FIB-SEM) bestimmt, umfasst.

**12.** Abgassystem für einen Verbrennungsmotor, umfassend ein Keramik-Wabenwandstromfilter-Substrat nach Anspruch 11, wobei das erste Ende des Substrats zu der stromaufwärtigen Seite ausgerichtet ist.

**13.** Verbrennungsmotor, umfassend ein Abgassystem nach Anspruch 12.

## Revendications

**1.** Procédé de fabrication d'un Substrat de filtre à écoulement sur paroi en nid d'abeilles en céramique ayant une longueur axiale L supportant un revêtement sur paroi, un fragment de ce Substrat de filtre revêtu sur paroi analysé par porosimétrie au mercure ayant un volume de pores de 0,05 à 0,5 $\mu$m de diamètre en tant que pourcentage d'un volume d'intrusion de mercure du fragment d'au moins 15,0 %, ce Substrat de filtre à écoulement sur paroi ayant une première extrémité et une seconde extrémité et comprenant un réseau de premiers canaux et de seconds canaux s'étendant axialement, chaque premier et chaque second canal étant définis en partie par une paroi de canal poreuse ayant des surfaces de paroi de canal poreuses s'étendant axialement, chaque premier canal partageant une paroi de canal poreuse avec un second canal adjacent, dans lequel, dans une image de microscope électronique à balayage d'une section transversale du Substrat revêtu, chaque canal a une forme de section creuse géométrique ayant au moins un sommet défini en partie par un angle de sommet entre deux bords de surface de canal, dans lequel les premiers canaux sont obturés à l'extrémité au niveau de la seconde extrémité du Substrat et les seconds canaux sont obturés à l'extrémité au niveau de la première extrémité du Substrat, ce procédé comprenant les étapes consistant à :

(i) préparer une bouillie comprenant de l'eau, un acide carboxylique, des particules d'oxyde inorganique, ou un mélange de deux particules d'oxyde inorganique ou plus, ayant un D(v, 0,9) déterminé par analyse de taille de particules par diffraction laser de 8 à 20 $\mu$m ; et 10 à 35 % en poids par rapport à 100 % en poids des particules d'oxyde inorganique d'un agent porogène de cellulose particulaire de forme tridimensionnellement non uniforme et ayant un diamètre sphérique équivalent D(v, 0.5) de 0,5 à 14 $\mu$m tel que déterminé par diffraction laser et ayant un rapport d'aspect modal (largeur/longueur) tel que déterminé par mesure directe de particule à l'aide d'un analyseur de forme de particule par microscopie à imagerie en flux de 0,3 à 0,9, dans lequel l'agent porogène de cellulose particulaire est insoluble dans l'eau, l'acide carboxylique et les composants supplémentaires de couche d'imprégnation de la bouillie ;
(ii) revêtir la bouillie au moins sur les parois de canal poreuses des premiers canaux du Substrat, dans lequel le Substrat a une taille moyenne de pore (D50) de 6 à 15 $\mu$m avant l'un quelconque revêtement et une porosité inférieure à 60 % avant l'un quelconque revêtement ; et

(iii) sécher et calciner le Substrat revêtu de bouillie,

moyennant quoi de la bouillie en suffisance est revêtue sur le Substrat de sorte que le produit de l'Étape (iii) a un chargement en revêtement de 0,07 à 0,4 g/po$^3$ (4,3 à 24,4 g/L), par rapport à un poids de Substrat avant l'Étape (ii), dans lequel une épaisseur moyenne arithmétique de revêtement sur paroi du produit de l'Étape (iii) mesurée à un angle qui divise en deux l'angle de sommet sur l'image de section transversale de microscope électronique à balayage du Substrat revêtu va de 5 à 70 $\mu$m.

2. Procédé selon la revendication 1, dans lequel l'étape (ii) comporte l'Étape consistant à revêtir les parois de canal poreuses des seconds canaux du Substrat de filtre avec une bouillie selon l'Étape (i), dans lequel la bouillie permettant de revêtir les parois de canal poreuses des seconds canaux a la même composition que ou une composition différente de la bouillie revêtue sur les parois de canal poreuses des premiers canaux.

3. Procédé selon la revendication 1 ou 2, dans lequel les particules d'oxyde inorganique ou un composant du mélange de particules d'oxyde inorganique ont une masse volumique apparente non tassée avant broyage de 275 à 850 g/L.

4. Procédé selon l'une quelconque des revendications précédentes, dans lequel les premiers canaux s'étendant axialement du Substrat de filtre à écoulement sur paroi ont un diamètre hydraulique supérieur aux seconds canaux, dans lequel le diamètre hydraulique est défini en tant que $D_H$=4A/P, où A est l'aire en section transversale de l'écoulement, et P est le périmètre mouillé de la section transversale.

5. Procédé selon la revendication 1, 2 ou 3, dans lequel les premiers canaux s'étendant axialement du Substrat de filtre à écoulement sur paroi sont une combinaison de canaux ayant des diamètres hydrauliques plus grands et plus petits et le diamètre hydraulique des seconds canaux est plus grand que les premiers canaux ayant un diamètre hydraulique plus petit, dans lequel le diamètre hydraulique est défini en tant que $D_H$=4A/P, où A est l'aire en section transversale de l'écoulement, et P est le périmètre mouillé de la section transversale.

6. Procédé selon l'une quelconque des revendications précédentes, dans lequel le revêtement sur paroi est un revêtement de catalyseur sur paroi et la bouillie de l'Étape (i) comprend un ou plusieurs sels de métal du groupe du platine autre que rhodium à une concentration en sel de métal du groupe du platine choisie de sorte que le produit de l'étape (iii) a un chargement total en métal du groupe du platine de 0,5 à 10 g/pied$^3$ (0,018 à 0,353 g/L).

7. Procédé selon l'une quelconque des revendications précédentes, dans lequel le Substrat de filtre est un filtre en carbure de silicium ayant une porosité de 38 à 45 % avant revêtement.

8. Procédé selon la revendication 7, dans lequel le Substrat de filtre revêtu a un pourcentage de porosité inférieur à 45,0 %.

9. Procédé selon la revendication 7 ou 8, dans lequel le Substrat de filtre revêtu a un volume total de pores d'au moins 0,230 cm$^3$/g déterminé par une combinaison de pycnométrie à l'hélium et de densitométrie au mercure.

10. Procédé selon l'une quelconque des revendications 1 à 6, dans lequel le substrat de filtre est un Substrat de filtre en Cordiérite ayant une porosité de 46 à 60 % avant revêtement.

11. Substrat de filtre à écoulement sur paroi en nid d'abeilles en céramique revêtu sur paroi permettant de traiter un gaz d'échappement comprenant une matière particulaire émise par un moteur à combustion interne, ce Substrat de filtre à écoulement sur paroi ayant une première extrémité et une seconde extrémité et une longueur L entre elles et comprenant un réseau de premiers canaux et seconds canaux s'étendant axialement, chaque premier et chaque second canal étant définis en partie par une paroi de canal poreuse ayant des surfaces de paroi de canal poreuses s'étendant axialement, chaque premier canal partageant une paroi de canal poreuse avec un second canal adjacent, dans lequel, dans une image de microscope électronique à balayage d'une section transversale du Substrat revêtu, chaque canal a une forme de section creuse géométrique ayant au moins un sommet défini en partie par un angle de sommet entre deux bords de surface de canal, dans lequel les premiers canaux sont obturés à l'extrémité au niveau de la seconde extrémité du Substrat et les seconds canaux sont obturés à l'extrémité au niveau de la première extrémité du Substrat, dans lequel au moins les surfaces de paroi de canal des premiers canaux Supportent 0,07 à 0,4 g/po$^3$ (4,3 à 24,4 g/L) d'une couche d'imprégnation de type sur paroi par rapport à un poids de Substrat avant revêtement, cette couche d'imprégnation comprenant des particules d'oxyde inorganique, ou un mélange de deux particules d'oxyde inorganique ou plus, dans lequel une épaisseur moyenne arithmétique de revêtement sur paroi mesurée à un angle qui divise en deux l'angle de sommet sur l'image en section transversale de microscope électronique à balayage du Substrat revêtu va de 5 à 70 $\mu$m, dans lequel un fragment du Substrat de filtre revêtu sur paroi analysé par porosimétrie au mercure a un volume de pores de 0,05 à 0,5 $\mu$m de diamètre en tant que pourcentage d'un volume d'intrusion de mercure du fragment d'au moins 15,0 % et dans lequel le revêtement de couche d'imprégnation sur paroi comprend des vides de forme non géométriquement uniforme en trois dimensions et d'un diamètre sphérique équivalent D(v, 0,5) de 0,1 à 8 $\mu$m et un rapport d'aspect modal (largeur/longueur) de 0,3 à 0,9 tel que déterminé par microscopie électronique à balayage à faisceau ionique focalisé (FIB-SEM).

**12.** Système d'échappement destiné à un moteur à combustion interne comprenant un substrat de filtre à écoulement sur paroi en nid d'abeilles en céramique selon la revendication 11, dans lequel la première extrémité du Substrat est orientée vers le côté en amont.

**13.** Moteur à combustion interne comprenant un système d'échappement selon la revendication 12.

Figure 1

Figure 2

**Figure 3**

**Figure 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0736503 A1
- WO 2015082892 A
- EP 2158956 A1
- EP 1961481 A2
- WO 2008153828 A2
- EP 2502662 A1
- WO 2017209083 A1
- EP 3623048 A1
- WO 2021126685 A1
- EP 3263214 A1
- WO 2006031600 A
- US 5496788 A
- EP 2862610 A1
- WO 9947260 A
- EP 1850068 A

**Non-patent literature cited in the description**

- **RONALD M. HECK et al.** Catalytic Air Pollution Control - Commercial Technology. John Wiley & Sons, Inc., 2009
- **M. BLAŻEK et al.** *Chemical Engineering Journal*, 2021, vol. 409, 128057
- **A. VARAMBHIA et al.** *Johnson Matthey Technol. Rev*, 2022, vol. 66 (3), 355-371